# EUROPÄISCHE PATENTSCHRIFT

(11) **EP 3 126 687 B1**
(45) Veröffentlichungstag und Bekanntmachung des Hinweises auf die Patenterteilung: **01.01.2020**
(21) Anmeldenummer: 15712904.0
(22) Anmeldetag: 27.03.2015
(51) Int. Cl.: F16C 17/02, F16C 17/24, B63H 25/52, G01N 3/56

(54) **LAGER ZUM LAGERN EINER WELLE, INSBESONDERE EINES RUDERSCHAFTES, ODER EINES RUDERBLATTES, ELEKTRONISCHE LAGERSPIELMESSVORRICHTUNG, RUDER UMFASSEND EIN LAGER ZUM LAGERN EINER WELLE ODER EINES RUDERBLATTES UND VERFAHREN ZUR MESSUNG EINES VERSCHLEISSES EINES LAGERS ZUM LAGERN EINER WELLE ODER EINES RUDERBLATTES**
BEARING FOR SUPPORTING A SHAFT, IN PARTICULAR A RUDDER SHAFT, OR A RUDDER BLADE, ELECTRONIC BEARING CLEARANCE MEASURING DEVICE, RUDDER COMPRISING A BEARING FOR SUPPORTING A SHAFT OR A RUDDER BLADE, AND METHOD FOR MEASURING WEAR OF A BEARING FOR SUPPORTING A SHAFT OR A RUDDER BLADE
PALIER SERVANT DE SUPPORT À UN ARBRE, EN PARTICULIER À UNE MÈCHE DE GOUVERNAIL OU À UN SAFRAN DE GOUVERNAIL, DISPOSITIF ÉLECTRONIQUE DE MESURE DU JEU DE PALIER, GOUVERNAIL COMPRENANT UN PALIER SERVANT DE SUPPORT À UN ARBRE OU À UN SAFRAN DE GOUVERNAIL, ET PROCÉDÉ DE MESURE DE L'USURE D'UN PALIER SERVANT DE SUPPORT À UN ARBRE OU À UN SAFRAN DE GOUVERNAIL

(30) Priorität: 01.04.2014 DE 102014104608; 23.07.2014 DE 102014110383
(43) Veröffentlichungstag der Anmeldung: 08.02.2017
(73) Patentinhaber: Becker Marine Systems GmbH, 21079 Hamburg (DE)
(72) Erfinder: KUHLMANN, Henning, 22559 Hamburg (DE); SELIGER, Leif, 24143 Kiel (DE)
(74) Vertreter: RGTH
(86) Internationale Anmeldenummer: PCT/EP2015/056738
(87) Internationale Veröffentlichungsnummer: WO 2015/150266

(56) Entgegenhaltungen:
- EP-A1- 1 602 842
- WO-A1-2005/083411
- WO-A1-2011/117301
- WO-A1-2011/117301
- DE-A1- 2 115 506
- GB-A- 2 192 949
- US-A- 3 775 680
- US-A1- 2009 223 083

## Beschreibung

Die Erfindung betrifft ein Lager zum Lagern einer Welle oder eines Ruderblattes umfassend ein erstes Lagerelement und ein zweites Lagerelement, wobei das erste Lagerelement eine Gleitfläche zur gleitenden Anlage mit dem zweiten Lagerelement aufweist, und ein Messgrößenaufnehmer mit einer Verschleißfläche zur gleitenden Anlage mit dem zweiten Lagerelement. Ferner betrifft die Erfindung eine Lagerspielmessvorrichtung, ein Ruder umfassend ein Lager zum Lagern einer Welle oder eines Ruderblattes und ein Verfahren zur Messung des Verschleißes eines Lagers zum Lagern einer Welle oder eines Ruderblattes.

Bei großen Rudern, beispielsweise für Containerschiffe, ist es bekannt, dass der Ruderschaft mittels eines Ruderkokers weit in das Innere des Ruderblattes hineingeführt wird, wenn das Ruder als Vollschweberuder ausgebildet ist. In der Regel ist der Ruderschaft am freien Ende des Ruderkokers in einem zwischen Ruderkoker und Ruderschaft angeordneten Halslager, welches beispielsweise als Gleitlager ausgebildet ist, gelagert. Die Gleitlager können alternativ oder zusätzlich auch an anderen Positionen zwischen Ruderkoker und Ruderschaft angeordnet sein. Ferner kann ein Hals- oder sonstiges Gleitlager auch zwischen Ruderkoker und Ruderblatt, das heißt, auf der Außenseite des Ruderkokers, angeordnet sein. Derartige oder ähnliche Gleitlager können jedoch beispielsweise auch zur Lagerung von Wellen genutzt werden. Insbesondere bei Propellerwellen von großen Containerschiffen werden derartige oder ähnliche Gleitlager verwendet.

Im Verlauf der Benutzung stellt sich ein Lagerverschleiß im Lager ein, sodass ein sehr aufwendiger Wechsel des Lagers durchgeführt werden muss, bei dem das Ruderblatt beziehungsweise der Propeller vom Ruderschaft beziehungsweise von der Propellerwelle entfernt werden muss.

### Stand der Technik

Die EP 1 780 118 B1 offenbart eine Vorrichtung mit einer Handhabe zur Messung des Halslagerspiels, um zu überprüfen, wie weit die Abnutzung eines Lagers fortgeschritten ist. Die Vorrichtung kann über eine Klappe im Ruderblatt, beispielsweise von einem Taucher, ins Lager eingeführt werden, sodass ohne eine Entfernung des Ruderblattes das Halslagerspiel und damit die Abnutzung des Lagers gemessen werden kann.

Aus der WO 2011/117301 A1 ist ein Ruder für Schiffe bekannt umfassend mindestens ein Lager zum Lagern eines Ruderblattes oder Ruderschaftes am Schiffsrumpf. Das Lager weist einen Innenlagerabschnitt und einen gleitend an am Innenlagerabschnitt anliegenden Außenlagerabschnitt auf. Am Außenlagerabschnitt oder am Innenlagerabschnitt ist ein Verschleißstift angeordnet, welcher gleitend an dem anderen von Innenlagerabschnitt und Außenlagerabschnitt anliegt. Der Verschleißstift ist von außen in eine Durchgangsbohrung des Außenlagerabschnitts eingesetzt und durchdringt diesen, so dass er gleitend mit dem Innenlagerabschnitt in Anlage ist. Der Verschleißstift kann von der Außenseite des Außenlagerabschnittes entnommen werden.

Die WO 2005/083411 A1 offenbart einen Sensor zur Detektion von Erosion einer Abnutzungsoberfläche einer Maschinenkomponente. Der Sensor umfasst ein elektrisch leitfähiges Element, welches in die Maschinenkomponente eingebettet ist. Das leitfähige Element umfasst ein erstes Ende in einem ersten Abstand von der Abnutzungsoberfläche sowie mindestens eine leitfähige Schleife umfassend einen Abnutzungsbereich in einem zweiten Abstand von der Abnutzungsoberfläche.

Die DE 21 15 506 A1 offenbart eine Einrichtung zur Überwachung des Verschleißes von Lagern, beispielsweise von Kunststofflagern schwerer Walzenstraßen, die mittels eines oder mehrerer gestufter, das Lager von außen nach innen durchdringender Kontaktgeber, ein optisches und/oder akustisches Signal auslöst, sobald der Verschleiß des Lagers einen kritischen oder vorberechneten Wert erreicht.

Aus der US 3,775,680 A ist eine Vorrichtung zur Detektion einer Abnutzung einer Oberfläche eines Maschinenelements bekannt. In dem Material des Maschinenelements ist ein Detektorelement in Form eines elektrischen Widerstands angeordnet, dessen stromleitender Querschnitt mit der Abnutzung der Oberfläche des Maschinenelements verringert wird.

Es ergibt sich dabei beim vorgenannten Stand der Technik das Problem, dass der bekannte Verschleißstift anfällig in Bezug auf Scherkräfte ist und somit die Gefahr einer Beschädigung des Verschleißstiftes durch bei gleitender Anlage des Verschleißstiftes an einem Innenlagerabschnitt auftretende Reibungs- und Scherkräfte besteht.

Ferner ergibt sich das Problem, dass der in der Durchgangsbohrung angeordnete Verschleißstift ein, insbesondere radiales, Spiel in dieser aufweisen kann, was dazu führen kann, dass der Verschleißstift nicht zeitlich kontinuierlich an dem Innenlagerabschnitt gleitend angeordnet ist, und ein Lagerverschleiß nicht zuverlässig gemessen werden kann. Ferner kann aufgrund der relativ großen Dimensionen der Durchgangsbohrung, da diese den Verschleißstift aufnehmen muss, eine strukturelle Schwächung des Außenlagerabschnittes eintreten.

### Darstellung der Erfindung: Aufgabe, Lösung, Vorteile

Der Erfindung liegt die Aufgabe zugrunde, die genannten Probleme zu lösen und ein Lager zum Lagern einer Welle, insbesondere eines Ruderschaftes, oder eines Ruderblattes bereitzustellen, mit welchem kontinuierlich das Lagerspiel beziehungsweise der Lagerverschleiß überwacht, festgestellt und gegebenenfalls dokumentiert werden kann. Diese Aufgabe wird durch das erfindungsgemäße Lager zum Lagern einer Welle, insbesondere eines Ruderschaftes, oder eines Ruderblattes gelöst. Ferner wird die Aufgabe durch eine Lagerspielmessvorrichtung sowie durch ein Ruder für ein Schiff und ein Verfahren zur Messung eines Verschleißes eines Lagers gelöst.

Erfindungsgemäß wird ein Lager zum Lagern einer Welle, nämlich eines Ruderschaftes, oder eines Ruderblattes vorgeschlagen, umfassend ein erstes Lagerelement und ein zweites Lagerelement, wobei das erste Lagerelement eine Gleitfläche zur gleitenden Anlage mit dem zweiten Lagerelement aufweist, und mindestens einen Messgrößenaufnehmer mit einer Verschleißfläche zur gleitenden Anlage mit dem zweiten Lagerelement, wobei der mindestens eine Messgrößenaufnehmer nicht stiftförmig ausgebildet ist, wobei der Messgrößenaufnehmer ein elektrisch leitfähiges Material aufweist, wobei das elektrisch leitfähige Material zur Messung des Verschleißes des Messgrößenaufnehmers im Bereich der Verschleißfläche angeordnet ist, wobei das elektrisch leitfähige Material als mindestens eine Schicht oder Leiterschicht und/oder mindestens ein Leiterkreis und/oder mindestens eine Leiterbahn ausgebildet ist, wobei der Messgrößenaufnehmer eine Kontrolleinheit umfasst, wobei die Kontrolleinheit dazu ausgebildet ist, durch Messung der Änderung des elektrischen Widerstandes und/oder durch Messung eines Kurzschlusses zwischen zwei im unverschlissenen Zustand des Messgrößenaufnehmers voneinander elektrisch isolierten Schichten und/oder Leiterkreisen und/oder Leiterbahnen einen Verschleiß des Messgrößenaufnehmers zu detektieren.

Bei der erfindungsgemäßen Ausgestaltung des Lagers zum Lagern einer Welle ist das Lager als Lager für einen Ruderschaft oder ein Ruderblatt ausgebildet. Jedoch kann das Lager zum Lagern einer Welle auch als Lager für eine Propellerwelle, insbesondere für eine Propellerwelle eines Wasserfahrzeuges, ausgebildet sein. Darüber hinaus ist das erfindungsgemäße Lager grundsätzlich für jede oder jedes, insbesondere hochbelastete beziehungsweise hochbelastetes, Achse oder Lager geeignet, bei welchen es aufgrund eines Achsverschleißes oder eines Lagerverschleißes zu einem Achsspiel oder zu einem Lagerspiel oder Halslagerspiel kommen kann. Insbesondere ist das erfindungsgemäße Lager für jedes Gleitlager geeignet, bei dem es, insbesondere unter Hochlast, zu einem Verschleiß und somit zu einer Vergrößerung des Lagerspiels kommen kann. Das Lager kann als ein Gleitlager, beispielsweise als ein ein Gleitlager umfassendes Halslager ausgebildet sein. Ferner kann das Lager bevorzugt als ein Radiallager ausgebildet sein, jedoch ist die Erfindung auch für ein Axiallager oder ein kombiniertes Radial- und Axiallager geeignet. Im Sinne der Erfindung kann das Lager somit als Gleitlager, Halslager, Radiallager, Axiallager, kombiniertes Radial- und Axiallager sowie Kombinationen der genannten Lagerarten sowie jedes weitere geeignete Lager ausgebildet sein.

Ist das erfindungsgemäße Lager zum Lagern eines Ruderschaftes ausgebildet, so kann das Lager in einem unteren Endbereich eines Ruderschaftes, beispielsweise zwischen einem unteren Endbereich des Ruderschaftes und einem Ruderkoker angeordnet sein. Darüber hinaus ist es jedoch auch möglich, dass das erfindungsgemäße Lager in einem oberen Endbereich eines Ruderschaftes, insbesondere in einem im Inneren eines Schiffsrumpfes angeordneten oberen Endbereich eines Ruderschaftes, angeordnet ist. Es können ein oder mehrere derartige Lager zum Lagern einer Welle, insbesondere eines Ruderschaftes, an einer Welle, insbesondere an einem Ruderschaft, angeordnet sein. Auch können die Lager an jeder geeigneten Position des Ruderschaftes angeordnet sein. Das erste Lagerelement des Lagers ist mit einer Gleitfläche zur gleitenden Anlage mit dem zweiten Lagerelement ausgebildet, wobei das zweite Lagerelement bevorzugt an der Welle, insbesondere an dem Ruderschaft und/oder an der Propellerwelle angeordnet ist, und das erste Lagerelement bevorzugt an einem Führungselement, wie beispielsweise einem Ruderkoker oder einem Gehäuse für eine Propellerwelle angeordnet ist. Der erfindungsgemäße Messgrößenaufnehmer ist ebenfalls mit einer Verschleißfläche zur gleitenden Anlage an dem zweiten Lagerelement ausgebildet. Durch die Vorsehung einer Verschleißfläche des Messgrößenaufnehmers ist es in vorteilhafter Weise möglich, dass der Verschleiß der Verschleißfläche des Messgrößenaufnehmers den Verschleiß des Lagers repräsentieren kann beziehungsweise in einem Zusammenhang mit dem Verschleiß des Lagers stehen kann. Somit kann vorteilhafterweise der Verschleiß des Messgrößenaufnehmers einen Verschleiß des Lagers zum Lagern einer Welle indizieren. Der Verschleiß der Verschleißfläche des Messgrößenaufnehmers findet dabei insbesondere durch das Gleiten der Verschleißfläche an dem zweiten Lagerelement statt.

Unter einem Messgrößenaufnehmer wird vorliegend auch ein Sensor beziehungsweise ein Messfühler oder ein Messgerät verstanden. Insbesondere umfasst der Begriff Messgrößenaufnehmer jede Vorrichtung, welche einen Verschleiß einer Verschleißfläche des Messgrößenaufnehmers feststellen und gegebenenfalls Informationen oder Daten über den Verschleiß weiterleiten kann.

Ein besonderer Vorteil ergibt sich daraus, dass der Messgrößenaufnehmer nicht stiftförmig ausgebildet ist, wobei unter dem Begriff "stiftförmiger Messgrößenaufnehmer" ein Messgrößenaufnehmer verstanden wird, welcher einen zylindrischen Körper und eine im Wesentlichen längliche Ausgestaltung aufweist. Eine längliche Ausgestaltung liegt bevorzugt vor, wenn das Verhältnis der Länge der Längsachse des Messgrößenaufnehmers zu der Länge oder Ausdehnung des Messgrößenaufnehmers senkrecht zur Längsachse größer als 1,2, bevorzugt größer als 1,5, besonders bevorzugt größer als 2,0 ist. Auch kann unter den Begriff "stiftförmiger Messgrößenaufnehmer" ein Messgrößenaufnehmer fallen, welcher einen Querschnitt in Form eines Vielecks und eine im Wesentlichen längliche Ausgestaltung aufweist. Insbesondere wird unter einem stiftförmigen Messgrößenaufnehmer ein Messgrößenaufnehmer verstanden, welcher einen zylindrischen Körper oder einen Querschnitt in Form eines Vielecks und eine im Wesentlichen längliche Ausgestaltung aufweist, wobei die Verschleißfläche bevorzugt im Wesentlichen senkrecht oder quer zur Längsachse des Messgrößenaufnehmers steht.

Zwar kann der neue Messgrößenaufnehmer einen Körper mit einem Querschnitt in Form eines Vielecks und einer im Wesentlichen länglichen Ausgestaltung aufweisen, jedoch ist dann die Verschleißfläche nicht an einer der Stirnseiten des Messgrößenaufnehmers beziehungsweise nicht an einer der Seiten, Außenseiten oder Ebenen, welche im Wesentlichen senkrecht oder quer zur Längsachse des Messgrößenaufnehmers stehen, angeordnet. Somit ist bevorzugt in diesem Fall der neue Messgrößenaufnehmer nicht stiftförmig ausgebildet, derart, dass die Verschleißfläche nicht senkrecht oder quer zur Längsachse des Messgrößenaufnehmers steht. Bevorzugt ist die Verschleißfläche des Messgrößenaufnehmers im Wesentlichen parallel zur Längsachse des Messgrößenaufnehmers ausgebildet. Die Verschleißfläche ist in diesem Fall nicht an einer Stirnseite sondern an einer Seitenfläche parallel zur Längsachse des Messgrößenaufnehmers angeordnet.

Aus dem Stand der Technik sind zylindrische Verschleißstifte bekannt, welche eine Verschleißfläche an einer der Stirnseiten des zylindrischen Verschleißstiftes aufweisen. Die bekannten Verschleißstifte sind dabei so in einem Außenlagerabschnitt angeordnet, dass sie diesen durchdringen und dass die Längsachse des Verschleißstiftes senkrecht auf dem Innenlagerabschnitt steht. Aufgrund der Ausrichtung und Formgebung des bekannten Verschleißstiftes ist dieser anfällig in Bezug auf Scherkräfte. Es besteht somit die Gefahr einer Beschädigung des Verschleißstiftes durch bei gleitender Anlage des Verschleißstiftes an einem Innenlagerabschnitt auftretenden Reibungs- und Scherkräfte.

Ist der neue Messgrößenaufnehmer nicht stiftförmig ausgebildet, wobei er zwar eine im wesentlichen längliche Ausgestaltung aufweisen kann, die Verschleißfläche dann jedoch nicht im Wesentlichen senkrecht oder quer zur Längsachse des Messgrößenaufnehmers steht, sondern bevorzugt im Wesentlichen parallel zu der Längsachse des Messgrößenaufnehmers ausgerichtet ist, so kann der Messgrößenaufnehmer derart mit der Verschleißfläche in gleitende Anlage mit dem zweiten Lagerelement gebracht werden, dass die Längsachse nicht senkrecht auf dem zweiten Lagerelement steht. Die Gefahr einer Beschädigung des Messgrößenaufnehmers durch bei gleitender Anlage des Messgrößenaufnehmers an dem zweiten Lagerelement auftretenden Reibungs- und Scherkräfte wird somit vorteilhafterweise verringert.

Aufgrund des Verzichtes auf stiftförmige Messgrößenaufnehmer wird erreicht, dass das Lager zum Lagern einer Welle, umfassend den Messgrößenaufnehmer, den großen Belastungen, welche insbesondere bei einem Lager zum Lagern eines Ruderschaftes auftreten, standhält. Bevorzugt ist der nicht stiftförmige Messgrößenaufnehmer fest mit dem ersten Lagerelement verbunden und insbesondere nicht aus dem ersten Lagerelement entfernbar oder entnehmbar.

Erfindungsgemäß weist der Messgrößenaufnehmer ein elektrisch leitfähiges Material auf, wobei das elektrisch leitfähige Material zur Messung des Verschleißes des Messgrößenaufnehmers im Bereich der Verschleißfläche des Messgrößenaufnehmers angeordnet ist, und wobei das elektrisch leitfähige Material als mindestens eine Schicht oder Leiterschicht und/oder mindestens ein Leiterkreis und/oder mindestens eine Leiterbahn ausgebildet ist.

Vorteilhaft an dieser Ausgestaltung ist, dass durch kontinuierliche Messung der elektrischen Leitfähigkeit beziehungsweise des Widerstandes oder eines Kurzschlusses des elektrisch leitfähigen Materials ein Verschleiß der Verschleißfläche des Messgrößenaufnehmers, und somit ein möglicher Verschleiß des Lagers zum Lagern einer Welle, festgestellt werden kann. Eine automatisierte und fehlerunanfällige Ermittlung, Feststellung oder Überwachung des Verschleißes eines Halslagers wird somit vorteilhafterweise möglich.

Ferner ist erfindungsgemäß vorgesehen, dass der Messgrößenaufnehmer eine Kontrolleinheit umfasst, wobei die Kontrolleinheit dazu ausgebildet ist, durch Messung der Änderung des elektrischen Widerstandes und/oder durch Messung eines Kurzschlusses zwischen zwei im unverschlissenen Zustand des Messgrößenaufnehmers voneinander elektrisch isolierten Schichten und/oder Leiterkreisen und/oder Leiterbahnen einen Verschleiß des Messgrößenaufnehmers zu detektieren.

Die Vorsehung einer Kontrolleinheit hat den Vorteil, dass die Messung der Änderung des Widerstandes und/oder die Messung eines Kurzschlusses automatisiert erfolgen kann, was zu einer vorteilhaften Vereinfachung und Fehlerunanfälligkeit des Messprozesses führt.

Vorteilhafte Weiterbildungen der Erfindung sind in den Unteransprüchen gekennzeichnet.

Bevorzugt ist die Verschleißfläche des Messgrößenaufnehmers entsprechend eines Ausschnittes der Mantelfläche eines Zylinders oder Kegels ausgebildet ist.

Ein Ausschnitt der Mantelfläche eines Zylinders oder Kegels bezeichnet vorliegend jede Teilfläche, insbesondere auch die gesamte Fläche der Mantelfläche eines Zylinders oder Kegels. Ferner wird unter einem Ausschnitt der Mantelfläche eines Zylinders oder Kegels sowohl ein Ausschnitt der Innenseite der Mantelfläche eines Zylinders oder Kegels als auch ein Ausschnitt der Außenseite der Mantelfläche eines Zylinders oder Kegels verstanden, sodass je nach Betrachtungsweise der Ausschnitt der Mantelfläche eines Zylinders oder Kegels eine konvexe Form, bei der Betrachtung des Ausschnittes einer Außenfläche der Mantelfläche eines Zylinders oder Kegels, aufweist oder eine konkave Form, bei der Betrachtung des Ausschnittes der Innenfläche der Mantelfläche eines Zylinders oder Kegels, aufweist. Der erfindungsgemäße Vorteil ergibt sich daraus, dass bei einem zweiten Lagerelement, welches eine zu der Form der Verschleißfläche des Messgrößenaufnehmers komplementäre Gleitfläche aufweist, an welcher die Verschleißfläche des Messgrößenaufnehmers gleitend anordbar ist, stets ein bündiger Kontakt der Verschleißfläche des Messgrößenaufnehmers mit der komplementären Gleitfläche des zweiten Lagerelementes vorliegt. Insbesondere ist es daher zweckmäßig, dass die Gleitfläche des zweiten Lagerelementes, an welche die Verschleißfläche des Messgrößenaufnehmers zur gleitenden Anlage anordbar ist, ebenfalls die Form eines Ausschnittes der Mantelfläche eines Zylinders oder Kegels hat, wobei der entsprechende gedachte Zylinder im Wesentlichen den gleichen Radius hat, wie der entsprechende gedachte Zylinder, welcher der Formgebung der Verschleißfläche des Messgrößenaufnehmers zugrunde gelegt wird. Durch die erfindungsgemäße Ausgestaltung der Verschleißfläche des Messgrößenaufnehmers und den sich daraus ergebenenden steten bündigen Kontakt der Verschleißfläche des Messgrößenaufnehmers mit der Gleitfläche des zweiten Lagerelementes, ist eine kontinuierliche Erfassung beziehungsweise Ermittlung des Verschleißes des Messgrößenaufnehmers und damit des Lagers zum Lagern einer Welle möglich, da aufgrund der bündigen Anlage der Verschleißfläche des Messgrößenaufnehmers mit der Gleitfläche des zweiten Lagerelementes ein Verschleiß der Verschleißfläche des Messgrößenaufnehmers für den Verschleiß des Lagers repräsentativ ist beziehungsweise in einem direkten Zusammenhang mit dem Verschleiß des Lagers steht.

Weiter bevorzugt ist in der Gleitfläche des ersten Lagerelementes eine Messgrößenaufnehmeraufnahme oder ein Rezess, insbesondere eine, bevorzugt schlitzförmige, Sackbohrung oder eine Nut oder eine Auskehlung oder eine Stufe, angeordnet, wobei der mindestens eine Messgrößenaufnehmer in der Messgrößenaufnehmeraufnahme oder dem Rezess angeordnet ist, und wobei der Messgrößenaufnehmer ausschließlich von der Seite der Gleitfläche in die Messgrößenaufnehmeraufnahme einsetzbar und/oder aus der Messgrößenaufnehmeraufnahme entnehmbar ist.

Insbesondere bei einer Ausgestaltung der Messgrößenaufnehmeraufnahme oder des Rezesses in Form einer schlitzförmigen oder länglichen Sackbohrung oder Nut oder Auskehlung oder Stufe, welche bevorzugt in Längsrichtung des ersten Lagerelementes in der Gleitfläche desselben vorgesehen ist, ist ein Messgrößenaufnehmer mit einer im Wesentlichen länglichen Ausgestaltung und einer Verschleißfläche, welche nicht senkrecht oder quer zur Längsachse des Messgrößenaufnehmers verläuft, so in der Messgrößenaufnehmeraufnahme oder dem Rezesses anordbar oder angeordnet, dass die Längsachse des Messgrößenaufnehmers nicht senkrecht zur Gleitfläche und im Falle einer Lagerbuchse nicht radial zur Lagerbuchse steht. Bevorzugt ist dann die Längsrichtung oder Längsachse des Messgößenaufnehmers parallel zur Längsrichtung des Lagerelementes, oder im Fall einer Lagerbuchse in Längsrichtung der Lagerbuchse oder im Wesentlichen in Umfangsrichtung der Lagerbuchse ausgerichtet. Die Gefahr einer Beschädigung des Messgrößenaufnehmers durch Scher- und Reibungskräfte wird somit verringert.

Durch die vorteilhafte Anordnung des Messgrößenaufnehmers in der Messgrößenaufnehmeraufnahme oder dem Rezess, insbesondere in einer, bevorzugt schlitzförmigen, Sackbohrung oder einer Nut oder einer Auskehlung oder einer Stufe, wird ermöglicht, dass der Messgrößenaufnehmer in dem Lagerelement versenkt wird, sodass die Verschleißfläche des Messgrößenaufnehmers insbesondere fluchtend beziehungsweise immer bündig mit der Gleitfläche des ersten Lagerelementes angeordnet ist. Insbesondere steht der Messgrößenaufnehmer nicht aus der Gleitfläche des ersten Lagerelementes hervor. Das bedeutet vorteilhafterweise, dass bei bündiger und gleitender Anlage des ersten Lagerelementes an dem zweiten Lagerelement gleichzeitig auch die Verschleißfläche des Messgrößenaufnehmers in bündiger Anlage zu dem zweiten Lagerelement liegt. Darüber hinaus ist es von Vorteil, dass durch Anordnung des Messgrößenaufnehmers in einer Messgrößenaufnehmeraufnahme oder einem Rezess des ersten Lagerelementes weitere Halterungen beziehungsweise Lager- oder Befestigungsvorrichtungen für den Messgrößenaufnehmer nicht vorgesehen werden müssen, wodurch sich eine vereinfachte Herstellung des Lagers umfassend den Messgrößenaufnehmer ergibt. Eine, bevorzugt, schlitzförmige Sackbohrung oder Nut oder Auskehlung oder Stufe eignet sich dabei in besonders vorteilhafterweise für die Aufnahme eines Messgrößenaufnehmers, welcher bevorzugt nicht stiftförmig ausgebildet ist. Darüber hinaus gestattet es die Ausgestaltung der Messgrößenaufnehmeraufnahme oder des Rezesses in Form einer schlitzförmigen oder länglichen Sackbohrung oder Nut oder Auskehlung oder Stufe, dass nicht nur ein im Wesentlichen punkteweises oder stark lokalisiertes Messen des Verschleißes erfolgt, sondern dass auch über einen gewissen ausgedehnten Bereich, welcher durch die längliche Ausgestaltung der Messgrößenaufnehmeraufnahme oder des Rezesses beziehungsweise des in dem Rezess aufgenommenen Messgrößenaufnehmers bestimmt ist, eine Messung des Verschleißes ermöglicht wird. Eine erhöhte Präzision der Verschleißmessung ist somit gewährleistet.

Da vorteilhafterweise der Messgrößenaufnehmer ausschließlich von der Seite der Gleitfläche in die Messgrößenaufnehmeraufnahme einsetzbar und/oder aus der Messgrößenaufnehmeraufnahme entnehmbar ist, wird das Problem aus dem Stand der Technik behoben, dass der in der Durchgangsbohrung angeordnete Verschleißstift ein, insbesondere radiales, Spiel in der Durchgansbohrung aufweisen kann. Der Messgrößenaufnehmer wird dabei bevorzugt von der Seite der Gleitfläche durch die Gleitfläche in die Messgrößenaufnehmeraufnahme eingesetzt und wird dann von einem bevorzugt in der Messgrößenaufnehmeraufnahme oder dem Rezess vorgesehenen Boden oder Grund der Messgrößenaufnehmeraufnahme oder des Rezesses, insbesondere in radialer Richtung gestützt, so dass ein radiales Spiel des Messgrößenaufnehmers in dem Lagerelement auf einfache Weise vermieden wird. Insbesondere wenn die Messgrößenaufnehmeraufnahme oder der Rezess als Sackbohrung, Nut, Auskehlung oder Stufe ausgebildet ist, weist die Sackbohrung, die Nut, die Auskehlung oder die Stufe einen Boden oder einen Grund auf, welcher bevorzugt aus Richtung der Gleitfläche gesehen den tiefsten Punkt der Sackbohrung, der Nut, der Auskehlung oder der Stufe definiert. Der Grund oder der Boden bildet dann eine, insbesondere radiale, Anlagefläche für den Messgrößenaufnehmer, so dass dieser, insbesondere bei einer Lagerbuchse, in radialer Richtung gegen eine Bewegung gesperrt ist.

Die Messgrößenaufnehmeraufnahme oder der Rezess kann bevorzugt in Längsrichtung oder in Quer- beziehungsweise in Umfangsrichtung in der Gleitfläche des ersten Lagerelementes angeordnet sein, so dass dann auch der Messgrößenaufnehmer bevorzugt in Längsrichtung oder in Quer- beziehungsweise in Umfangrichtung in der Gleitfläche des ersten Lagerelementes angeordnet ist. Ist das erste Lagerelement als Teil eines Lagers zum Lagern eines Ruderschaftes, insbesondere als Lagerbuchse, ausgebildet, so entspricht die Längsrichtung des Lagerelementes der Längsrichtung des Ruderschaftes, wenn dieser in dem Lager zum Lagern eines Ruderschaftes angeordnet ist. Die Messgrößenaufnehmeraufnahme oder der Rezess kann jedoch auch in jeder anderen geeigneten Ausrichtung in der Gleitfläche des ersten Lagerelementes vorgesehen sein.

Durch Anordnung des Messgrößenaufnehmers beziehungsweise der Messgrößenaufnehmeraufnahme oder des Rezesses in Längsrichtung des Lagerelementes wird eine vereinfachte Herstellung des Messgrößenaufnehmers möglich, da die Verschleißfläche des Messgrößenaufnehmers nicht oder nur geringfügig an die Krümmung der Gleitfläche, insbesondere wenn das erste Lagerelement als Lagerbuchse ausgebildet ist, angepasst werden muss. Ferner kann ein Verschleiß des Lagers oder des Lagerelementes vorteilhaft auch über einen größeren Messbereich in Längsrichtung des Lagerelementes festgestellt werden, ohne dass zusätzliche Messgrößenaufnehmer erforderlich sind.

In einer bevorzugten Ausgestaltung des Lagers zum Lagern einer Welle ist vorgesehen, dass das erste Lagerelement eine Lagerbuchse ist, und/oder dass das erste Lagerelement auf der Innenseite, insbesondere der Innenwand, eines Kokerrohres eines Ruderkokers anordbar ist, und/oder dass das erste Lagerelement auf der Außenseite des Kokerrohres des Ruderkokers anordbar ist, und/oder dass das zweite Lagerelement auf einem Ruderschaft anordbar ist oder als Teil eines Ruderschaftes ausbildbar ist, und/oder dass das zweite Lagerelement an einem Ruderblatt anordbar ist, und/oder dass das Lager zwischen dem Kokerrohr und dem Ruderschaft anordbar ist, und/oder dass das Lager zwischen dem Kokerrohr und dem Ruderblatt anordbar ist.

In einer vorteilhaften Ausgestaltung ist somit das erste Lagerelement auf der Innenseite eines Kokerrohres eines Ruderkokers anordbar, und das zweite Lagerelement ist auf einem Ruderschaft anordbar oder als Teil eines Ruderschaftes ausbildbar. In dieser vorteilhaften Ausgestaltung bilden somit das erste und das zweite Lagerelement ein Halslager oder ein Radiallager, welches einen Ruderschaft im Inneren eines Ruderkokers beziehungsweise im Inneren eines Kokerrohres eines Ruderkokers lagert. Es wird hiermit vorteilhafterweise eine Lagerung eines Ruderschaftes, bevorzugt im unteren Endbereich des Ruderschaftes, in einem Ruderkoker erzielt, an einer Position entlang des Ruderschaftes, an welcher die größten Scher-, Torsions- und Druckkräfte und Spannungen auf den Ruderschaft, das Kokerrohr des Ruderkokers beziehungsweise das Lager wirken. Durch die vorteilhafte Anordnung wird somit erreicht, dass ein Lagerverschleiß dort festgestellt wird, wo die höchsten Belastungen und somit das höchste Risiko für einen Verschleiß eines Lagers vorliegen.

Ferner kann vorteilhafterweise vorgesehen sein, dass das zweite Lagerelement als Teil eines Ruderschaftes ausgebildet ist. In dieser vorteilhaften Ausführungsform ist es somit nicht nötig, ein eigenständiges zweites Lagerelement auf dem Ruderschaft anzuordnen, sondern stattdessen bildet der Ruderschaft beziehungsweise ein Ausschnitt der Oberfläche des Ruderschaftes selbst das zweite Lagerelement. Durch Weglassen beziehungsweise durch Ausbilden des zweiten Lagerelementes als Teil des Ruderschaftes ergibt sich eine vereinfachte Konstruktion sowie geringere Wartungs- und Herstellungskosten.

Weiter kann es vorteilhaft sein, dass das erste Lagerelement auf der Außenseite des Kokerrohres des Ruderkokers anordbar ist und dass das zweite Lagerelement an einem Ruderblatt, insbesondere auf der Innenseite einer Aufnahmeaushöhlung des Ruderblattes für den Ruderkoker, angeordnet ist. Diese vorteilhafte Ausführung eignet sich insbesondere dann, wenn das Ruderblatt durch ein zwischen dem Ruderblatt und dem Kokerrohr des Ruderkokers angeordnetes Lager gelagert wird.

Auch bei dieser vorteilhaften Ausgestaltung ist es prinzipiell möglich, dass das erste Lagerelement als Teil des Kokerrohres des Ruderkokers ausgebildet ist oder dass das zweite Lagerelement als Teil des Ruderblattes ausgebildet ist.

Darüber hinaus ist es prinzipiell auch möglich, dass die Rollen des ersten Lagerelementes und des zweiten Lagerelementes vertauscht werden, sodass beispielsweise das erste Lagerelement auf einem Ruderschaft anordbar ist oder als Teil eines Ruderschaftes ausbildbar beziehungsweise, dass das erste Lagerelement an einem Ruderblatt anordbar ist.

Ferner ist es auch möglich, dass der Messgrößenaufnehmer eine Verschleißfläche zur gleitenden Anlage mit dem ersten Lagerelement aufweist, jedoch wird ein Messgrößenaufnehmer mit einer Verschleißfläche zur gleitenden Anlage an dem zweiten Lagerelement bevorzugt.

Bevorzugt wird der Verschleiß des Lagers mittels eines elektronischen Messgrößenaufnehmers gemessen, welcher vollständig ohne bewegliche Bauteile auskommt. Ferner ist es bevorzugt, dass die Messung des Verschleißes des Lagers im trockenen Zustand als auch im nassen Zustand des Lagers durchführbar ist. Ist das Lager als Lager für einen Ruderschaft oder für eine Propellerwelle ausgebildet, so kann die Messung des Verschleißes des Lagers auch im getauchten Zustand des Lagers durchgeführt werden. Im getauchten Zustand ist die Verschleißfläche des Messgrößenaufnehmers im Allgemeinen von Wasser, insbesondere Seewasser, umspült.

Eine weitere zweckmäßige Ausgestaltung sieht vor, dass das elektrisch leitfähige Material als mindestens zwei Schichten oder Leiterschichten und/oder als mindestens zwei Leiterkreise und/oder als mindestens zwei Leiterbahnen ausgebildet ist, wobei in einem unverschlissenen Zustand des Messgrößenaufnehmers die mindestens zwei Schichten oder Leiterschichten und/oder die mindestens zwei Leiterkreise und/oder die mindestens zwei Leiterbahnen elektrisch voneinander isoliert sind.

In einem unverschlissenen Zustand des Messgrößenaufnehmers besteht daher keine elektrisch leitfähige Verbindung zwischen den mindestens zwei Leiterbahnen und/oder Leiterkreisen und/oder Leiterschichten, sodass die elektrische Leitfähigkeit zwischen den mindestens zwei Schichten beziehungsweise zwischen den mindestens zwei Leiterkreisen und/oder den mindestens zwei Leiterbahnen im Wesentlichen verschwindet, beziehungsweise dass der elektrische Widerstand zwischen den zwei Schichten im Wesentlichen sehr groß ist. Insbesondere ist im unverschlissenen Zustand kein Kurzschluss zwischen den mindestens zwei Schichten, Leiterkreisen oder Leiterbahnen messbar. Wird somit vorteilhafterweise kein Kurzschluss beziehungsweise eine im Wesentlichen verschwindende elektrische Leitfähigkeit zwischen zwei Leiterbahnen, Schichten oder Leiterkreisen des Messgrößenaufnehmers gemessen, so deutet das Fehlen des Kurzschlusses beziehungsweise das Verschwinden oder die Nichtmessbarkeit der elektrischen Leitfähigkeit zwischen den mindestens zwei Schichten, Leiterkreisen oder Leiterbahnen auf einen unverschlissenen Messgrößenaufnehmer und somit auf ein unverschlissenes beziehungsweise nur geringfügig verschlissenes Lager zum Lagern einer Welle hin. Findet hingegen ein Verschleiß der Verschleißfläche des Messgrößenaufnehmers und somit ein Verschleiß des Lagers zum Lagern einer Welle statt, so kann im verschlissenen Zustand ein Kurzschluss zwischen den mindestens zwei Schichten, Leiterkreisen oder Leiterbahnen auftreten, welcher messbar ist und welcher einen Verschleiß des Lagers oder ein Halslagerspiel indiziert. Die Messung des elektrischen Widerstandes oder eines Kurzschlusses stellt somit eine besonders einfache Ausgestaltung der Messung eines Verschleißes eines Lagers zum Lagern einer Welle dar.

Bevorzugt sind 2 bis 20 Schichten oder Leiterschichten und/oder Leiterkreise und/oder Leiterbahnen vorgesehen. Besonders bevorzugt sind 3 bis 10 Schichten oder Leiterschichten und/oder Leiterkreise und/oder Leiterbahnen vorgesehen.

Somit stehen bevorzugt zwei Messmethoden zur Messung eines Verschleißes der Verschleißfläche des Messgrößenaufnehmers zur Verfügung. In einer ersten Messmethode kann der Verschleiß der Verschleißfläche dadurch festgestellt werden, dass eine oder mehrere Schichten oder Leiterschichten und/oder Leiterkreise und/oder Leiterbahnen verschlissen oder zerstört sind, d.h. dass diese Schichten, Leiterkreise oder Leiterbahnen nicht mehr elektrisch leitfähig sind. Somit zeigt ein sprunghafter Anstieg des elektrischen Widerstandes einer einzelnen oder mehrerer Schichten, Leiterkreise oder Leiterbahnen den Grad des Verschleißes der Verschleißfläche des Messgrößenaufnehmers dar. Diese Messmethode eignet sich für trockene Lager. Ein trockenes Lager kann beispielsweise bei einem Lager für einen Ruderschaft vorliegen, wenn das Schiff im Trockendock liegt oder ohne Ballast fährt, so dass das Lager sich oberhalb der Wasseroberfläche befindet.

In einer zweiten Messmethode wird eine elektrische Leitfähigkeit bzw. ein Kurzschluss zwischen mindestens zwei Schichten, Leiterkreisen oder Leiterbahnen gemessen. Dies ist insbesondere daher von Vorteil, da die zweite Messmethode auch bei einem nassen Lager beziehungsweise im Fall eines elektrisch leitfähigen zweiten Lagerelementes, wie beispielsweise ein metallischer Ruderschaft, anwendbar ist. Ist das Lager nämlich in einem getauchten und daher nassen Zustand, so ist das Lager mit Wasser bzw. Seewasser geflutet. Ist eine einzelne Schicht, Leiterkreis oder Leiterbahn verschlissen, so kann das Seewasser weiterhin den elektrischen Kontakt zwischen den Enden bzw. Stirnenden der Überreste oder der Anschlüsse der einzelnen Schicht, des einzelnen Leiterkreises oder der einzelnen Leiterbahn herstellen. Liegt dagegen eine metallische Welle wie ein metallischer Ruderschaft an der Verschleißfläche des Messgrößenaufnehmers an, so kann der elektrische Kontakt bei einer verschlissenen Schicht, einem Leiterkreis oder einer Leiterbahn zwischen den Enden beziehungsweise den Stirnenden der Überreste oder der Anschlüsse der einzelnen Schicht, das einzelnen Leiterkreises oder der einzelnen Leiterbahnen durch die metallische Welle hergestellt werden.

Bei der zweiten Messmethode hingegen kann ein Kurzschlussfall zwischen verschiedenen Schichten, Leiterkreisen oder Leiterbahnen ausschließlich in einem verschlissenen Zustand auftreten, da im unverschlissenen Zustand die einzelnen Leiterschichten, Leiterkreise oder Leiterbahnen elektrisch voneinander isoliert sind.

Somit bietet die bevorzugte Ausführungsform zwei komplementäre Messmethoden zur Messung eines Verschleißes der Verschleißfläche eines Messgrößenaufnehmers an, wobei insbesondere die zweite Messmethode der Messung eines Kurzschluss zwischen zwei Leiterschichten, Leiterkreisen oder Leiterbahnen bei einem nassen Lager vorzuziehen ist. Jedoch können beide Messmethoden auch gleichzeitig angewendet werden.

Bevorzugt sind in einem unverschlissenen Zustand des Messgrößenaufnehmers die mindestens zwei Schichten oder Leiterschichten und/oder die mindestens zwei Leiterkreise und/oder die mindestens zwei Leiterbahnen wasserdicht voneinander und zur Umgebung hin isoliert.

Eine besonders vorteilhafte Weiterbildung sieht vor, dass die mindestens zwei Schichten oder Leiterschichten und/oder Leiterkreise und/oder Leiterbahnen einen unterschiedlichen Abstand zu der Verschleißfläche aufweisen, und/oder dass die mindestens zwei Schichten oder Leiterschichten und/oder Leiterkreise und/oder Leiterbahnen benachbart voneinander, bevorzugt in einem Abstand von 100 µm bis 1000 µm, besonders bevorzugt in einem Abstand von 200 µm bis 700 µm,insbesondere bevorzugt in einem Abstand von 400 µm bis 600 µm, angeordnet sind.

Dabei können bevorzugt die jeweiligen Abstände der mindestens zwei Schichten, Leiterkreise oder Leiterbahnen von der Verschleißfläche zumindest in einem Bereich in der Nähe der Verschleißfläche oder an jedem Punkt der Leiterkreise, Leiterbahnen oder Schichten konstant sein, wobei die Abstände beispielsweise aus den Schnittpunkten einer Orthogonalen der Verschleißfläche mit den Schichten, Leiterkreisen oder Leiterbahnen bestimmt wird, jedoch können diese Abstände auch entlang einer Leiterschicht, eines Leiterkreises oder einer Leiterbahn variieren. Auch die Differenz der Abstände der Leiterschichten, beziehungsweise Leiterkreise oder Leiterbahnen können konstant sein oder variieren, wobei die Differenz der Abstände beispielsweise aus den Schnittpunkten einer Orthogonalen der Verschleißfläche mit den Schichten, Leiterkreisen oder Leiterbahnen bestimmt wird. Es ist jedoch im Prinzip auch möglich, dass die Schichten, Leiterkreise oder Leiterbahnen einen gleichen Abstand zu der Verschleißfläche des Messgrößenaufnehmers aufweisen. Besonders bevorzugt sind die Schichten, Leiterkreise oder Leiterbahnen zumindest in einem Bereich in der Nähe der Verschleißfläche im Wesentlichen parallel zur Verschleißfläche und/oder parallel zueinander ausgerichtet oder angeordnet. Weiter ist es bevorzugt, dass die Schichten, Leiterkreise oder Leiterbahnen nebeneinander liegen, also zumindest teilweise in einer gemeinsamen gedachten Fläche oder Ebene liegen, wobei die Fläche oder Ebene bevorzugt parallel zu der Verschleißfläche ausgerichtet ist. Da die Verschleißfläche entsprechend eines Ausschnittes der Mantelfläche eines Zylinders ausgebildet ist, ist die Fläche oder Ebene bevorzugt ebenfalls als Ausschnitt der Mantelfläche eines Zylinders ausgebildet. Jedoch kann die Fläche oder Ebene auch ungekrümmt sein. Weitere Schichten, Leiterkreise oder Leiterbahnen können dann ebenfalls zumindest teilweise in einer weiteren Fläche oder Ebene liegen, wobei die weitere Fläche oder Ebene bevorzugt parallel zu der Verschleißfläche ausgerichtet ist, jedoch einen anderen Abstand zu der Verschleißfläche als die erste Fläche oder Ebene aufweist.

Weiter insbesondere ist es auch möglich, dass die Schichten, Leiterbahnen oder Leiterkreise aus der Verschleißfläche heraustreten beziehungsweise direkt an der Verschleißfläche enden. Auch können die Schichten, Leiterbahnen oder Leiterkreise in einem Winkel, bevorzugt in einem rechten Winkel, zu der Verschleißfläche stehen oder auf diese zulaufen. Die Schichten, Leiterbahnen oder Leiterkreise können dann aus der Verschleißfläche heraustreten oder in der Verschleißfläche enden oder in der Nähe der Verschleißfläche enden, das heißt in einem Bereich des Messgrößenaufnehmers, welcher in der, bevorzugt unmittelbaren, Nähe der Verschleißfläche angeordnet ist.

Es ergibt sich ein Vorteil insbesondere dann, wenn die mindestens zwei Schichten, Leiterkreise oder Leiterbahnen unterschiedliche Abstände zu der Verschleißfläche aufweisen, wobei die Abstände darüber hinaus im Wesentlichen bevorzugt konstant sind. Findet ein Verschleiß der Verschleißfläche statt, so wird Schicht für Schicht der Verschleißfläche abgerieben, bis schließlich die erste Leiterschicht, Leiterkreis oder Leiterbahn freiliegt und in direktem, gleitendem Kontakt mit dem zweiten Lagerelement ist. Findet nun weiterer Abrieb statt, wird die erste Schicht oder Leiterkreis oder Leiterbahn zerstört, was insbesondere bei einem trockenen Lager zu einem schlagartigen messbaren Anstieg des elektrischen Widerstandes der ersten Leiterschicht führt, wodurch ein Verschleiß der Verschleißfläche festgestellt werden kann. Findet daraufhin weiterer Abrieb statt, so liegt schließlich auch die zweite oder die weiteren Schichten, Leiterkreise oder Leiterbahnen auf der Verschleißfläche frei, und können durch weiteren Verschleiß ebenfalls zerstört werden, wodurch nun ein fortgeschrittener Verschleiß feststellbar ist. Darüber hinaus ist es auch möglich, dass bei einem Verschleiß der Verschleißfläche des Messgrößenaufnehmers die Lage und Form der Schichten, Leiterkreise oder Leiterbahnen verändert wird, insbesondere durch Scherkräfte, Druckkräfte oder Spannungskräfte, sodass diese im verschlissenen Zustand in elektrischem Kontakt zueinander kommen und dass dadurch ein Kurzschluss zwischen den Schichten, Leiterkreisen oder Leiterbahnen stattfindet. Dies ist insbesondere der Fall, wenn die die Schichten, Leiterbahnen oder Leiterkreise in einem Winkel, bevorzugt in einem rechten Winkel, zu der Verschleißfläche stehen oder auf diese zulaufen.

Jedoch ist es bevorzugt, dass die mindestens zwei Schichten oder Leiterschichten und/oder Leiterkreise und/oder Leiterbahnen im Wesentlichen parallel zu der Verschleißfläche angeordnet sind. In diesem Fall werden durch Abrieb sukzessive weitere Schichten, Leiterkreise oder Leiterbahnen auf der Verschleißfläche freigelegt, und können durch weiteren Verschleiß ebenfalls zerstört werden. Durch Wasser, insbesondere Seewasser, oder durch ein metallisches zweites Lagerelement wird ein Kurzschluss zwischen verschiedenen Schichten, Leiterkreisen oder Leiterbahnen hergestellt. Findet ein derartiger elektrischer Kurzschluss statt, so ist durch die Feststellung dieses Kurzschlusses der Verschleiß des Messgrößenaufnehmers und damit des Lagers feststellbar. Je weiter der Abrieb der Verschleißfläche des Messgrößenaufnehmers fortgeschritten ist, umso mehr Schichten, Leiterkreise oder Leiterbahnen befinden sich nahe der Verschleißfläche, da der jeweilige Abstand der Schichten, Leiterbahnen oder Leiterkreise zur Verschleißfläche abgenommen hat. Somit ist durch sukzessive Feststellung von Kurzschlüssen zwischen verschiedenen Leiterbahnen, Schichten oder Leiterkreisen, insbesondere zwischen benachbarten Leiterbahnen, Schichten oder Leiterkreisen oder durch sukzessives Feststellen von sich ändernden, elektrischen Widerständen der Leiterbahnen, Schichten oder Leiterkreise ein Verschleiß und insbesondere der Umfang des Verschleißes der Verschleißfläche des Messgrößenaufnehmers feststellbar. Um eine präzise Feststellung des Verschleißes zu treffen, ist es zweckmäßig, dass die Schichten, Leiterkreise oder Leiterbahnen nur einen geringen Abstand voneinander beziehungsweise von der Verschleißfläche haben. Bevorzugt liegt dieser Abstand in einem Bereich von 100 µm bis 1000 µm, besonders bevorzugt in einem Bereich von 200 µm bis 700 µm,insbesondere bevorzugt in einem Bereich von 400 µm bis 600 µm. Der Abstand bestimmt die Messgenauigkeit. Sind sogar mehrere Leiterschichten, Leiterkreise oder Leiterbahnen zumindest teilweise in einer Fläche oder Ebene parallel zur Verschleißfläche angeordnet, so kann ein Kurzschluss zwischen diesen Leiterschichten, Leiterkreisen oder Leiterbahnen gemessen werden. In diesem Fall muss für die Messung eines Verschleißes der Abrieb nicht soweit fortgeschritten sein, dass bereits mehrere Leiterschichten, Leiterkreise oder Leiterbahnen, welche einen unterschiedlichen Abstand zur Verschleißfläche haben, zerstört sind.

Die Kontrolleinheit kann beispielsweise eine Recheneinheit, insbesondere eine programmierbare Rechenvorrichtung wie einen Mikroprozessor, umfassen. Somit kann durch entsprechende Programmierung vorteilhafterweise die Funktionsweise der Kontrolleinheit beziehungsweise des Messgrößenaufnehmers festgelegt werden. Beispielsweise kann bestimmt werden, dass die Kontrolleinheit ständig oder durchgehend den elektrischen Widerstand oder einen Kurzschluss zwischen zwei Schichten, Leiterkreisen oder Leiterbahnen des Messgrößenaufnehmers misst. Jedoch kann die Messung auch in vorher festgelegten Intervallen stattfinden. Ferner lassen sich Messbereiche und Messtoleranzen für die Änderung des elektrischen Widerstandes oder für die Messung eines Kurzschlusses festlegen. Auch ist es prinzipiell möglich, dass die Kontrolleinheiten der Messgrößenaufnehmer eine gemessene Änderung eines elektrischen Widerstandes oder eines Kurzschlusses kontinuierlich oder in vordefinierten zeitlichen Abständen an eine übergeordnete Recheneinheit senden. In der übergeordneten Recheneinheit können dann die Informationen mehrere Messgrößenaufnehmer zusammenlaufen, sodass insbesondere bei über den Umfang eines Ruderschaftes oder eines Lagers verteilten Messgrößenaufnehmern eine präzise Messung des Verschleißes oder des Lagerspiels beziehungsweise Halslagerspiels des Lagers ermittelbar ist. Mit weiterem Vorteil können die Kontrolleinheiten der Messgrößenaufnehmer auch eine Energieversorgung, wie beispielsweise eine Batterie aufweisen. Jedoch ist bevorzugt vorgesehen, dass die Messgrößenaufnehmer beziehungsweise die Kontrolleinheiten der Messgrößenaufnehmer über eine externe elektrische Leistungsquelle mit Strom versorgt werden. Die elektrische Leistungsquelle versorgt den Messgrößenaufnehmer mit einer elektrischen Spannung von bevorzugt zwischen 2 V und 10 V, besonders bevorzugt von 5 V. Die Stromversorgung ist weiter bevorzugt galvanisch von beispielsweise einem Bordnetz eines Schiffes getrennt. Jedoch könne die Kontrolleinheiten auch außerhalb des Messgrößenaufnehmers angeordnet sein. Jedoch muss in jedem Fall die Kontrolleinheit oder die übergeordnete Recheneinheit zur Messung eines elektrischen Widerstandes oder eines Kurzschlusses wirkverbunden sein, wobei die Wirkverbindung bevorzugt über elektrisch leitfähige Leitmittel hergestellt wird. Ferner ist es auch möglich, dass keine Kontrolleinheiten vorgesehen sind und dass die übergeordnete Recheneinheit die logische Abfrage der Schichten, Leiterkreise oder Leiterbahnen im Hinblick auf die Messung eines elektrischen Widerstandes oder eines Kurzschlusses durchführt.

In einer besonderen Ausgestaltung des Lagers ist vorgesehen, dass das elektrisch leitfähige Material in einem Träger, insbesondere einer Platine oder einer Leiterplatte, angeordnet ist, und/oder dass das elektrisch leitfähige Material und/oder der Träger in einem nichtmetallischen Material, insbesondere in einem Kunstharz angeordnet beziehungsweise eingegossen ist.

Die vorteilhafte Anordnung des elektrisch leitfähigen Materials in einem Träger oder einer Platine oder einer Leiterplatte sorgt für eine ortsfeste Fixierung des elektrisch leitfähigen Materials im unverschlissenen Zustand, welche erst durch zunehmenden Verschleiß der Verschleißfläche des Messgrößenaufnehmers, und damit auch des Trägers, insbesondere der Platine oder der Leiterplatte, verändert wird. Dies ermöglicht eine präzise und sichere Bestimmung eines Verschleißes der Verschleißfläche des Messgrößenaufnehmers. Ferner gestattet es vorteilhafterweise die Anordnung des elektrisch leitfähigen Materials in dem Träger, insbesondere in einer Platine oder einer Leiterplatte, das an oder in dem Träger ebenfalls die Kontrolleinheit des Messgrößenaufnehmers angeordnet werden kann, sodass eine leicht vorproduzierbare Messeinheit des Messgrößenaufnehmers, bestehend aus Träger beziehungsweise Platine oder Leiterplatte, elektrisch leitfähigem Material und Kontrolleinheit bereitgestellt wird. Dies ergibt eine kosteneffiziente Herstellungsweise. Darüber hinaus wird die Produktion des Lagers vereinfacht, da nur noch die Gesamteinheit, bestehend aus Träger und elektrisch leitfähigem Material beziehungsweise gegebenenfalls der Kontrolleinheit, im Lager angeordnet werden muss.

Durch Eingießen des elektrisch leitfähigen Materials in ein nichtmetallisches Material, insbesondere in einem Kunstharz, kann aufgrund der Plastizität des Kunstharzes beziehungsweise eines nichtmetallischen Materials beim Eingießvorgang ein Messgrößenaufnehmer bereitgestellt werden, welche den jeweiligen räumlichen Gegebenheiten des Lagers angepasst ist. Hierdurch erschließen sich insbesondere vielseitige Anwendungsmöglichkeiten des Lagers beziehungsweise des Messgrößenaufnehmers des Lagers. Dabei kann ferner das elektrisch leitfähige Material direkt in das nichtmetallische Material beziehungsweise in das Kunstharz eingegossen werden, jedoch ist es auch möglich, dass der Träger, insbesondere die Platine oder die Leiterplatte, umfassend das elektrisch leitfähige Material in das Kunstharz eingegossen werden.

Eine weitere bevorzugte Ausführungsform sieht vor, dass das erste Lagerelement und/oder das zweite Lagerelement eine Messgrößenaufnehmeraufnahme oder einen Rezess, insbesondere eine, bevorzugt schlitzförmige, Sackbohrung oder eine Nut oder eine Auskehlung oder eine Stufe aufweist, und dass der mindestens eine Messgrößenaufnehmer in der Messgrößenaufnehmeraufnahme oder dem Rezess angeordnet ist, wobei bevorzugt der Messgrößenaufnehmer mit einem nichtmetallischen Material, insbesondere mit einem Kunstharz, in der Messgrößenaufnehmeraufnahme oder dem Rezess fixiert ist.

Durch die vorteilhafte Anordnung des Messgrößenaufnehmers in dem Rezess wird ermöglicht, dass der Messgrößenaufnehmer in dem Lagerelement versenkt wird, sodass die Verschleißfläche des Messgrößenaufnehmers insbesondere fluchtend beziehungsweise immer bündig mit der Gleitfläche des ersten Lagerelementes angeordnet ist. Insbesondere steht der Messgrößenaufnehmer nicht aus der Gleitfläche des ersten Lagerelementes hervor. Das bedeutet vorteilhafterweise, dass bei bündiger und gleitender Anlage des ersten Lagerelementes an dem zweiten Lagerelement gleichzeitig auch die Verschleißfläche des Messgrößenaufnehmers in bündiger Anlage zu dem zweiten Lagerelement liegt. Darüber hinaus ist es von Vorteil, dass durch Anordnung des Messgrößenaufnehmers in einen Rezess des ersten Lagerelementes weitere Halterungen beziehungsweise Lager- oder Befestigungsvorrichtungen für den Messgrößenaufnehmer nicht vorgesehen werden müssen, wodurch sich eine vereinfachte Herstellung des Lagers umfassend den Messgrößenaufnehmer ergibt. Eine, bevorzugt, schlitzförmige Sackbohrung oder Nut oder Auskehlung oder Stufe eignet sich dabei in besonders vorteilhafterweise für die Aufnahme eines Messgrößenaufnehmers, welcher nicht stiftförmig ausgebildet ist. Darüber hinaus gestattet es die Ausgestaltung des Rezesses in Form einer schlitzförmigen oder länglichen Sackbohrung oder Nut oder Auskehlung oder Stufe, dass nicht nur ein im Wesentlichen punkteweises oder stark lokalisiertes Messen des Verschleißes erfolgt, sondern dass auch über einen gewissen ausgedehnten Bereich, welcher durch die längliche Ausgestaltung des Rezesses beziehungsweise des in dem Rezess aufgenommenen Messgrößenaufnehmers bestimmt ist, eine Messung des Verschleißes ermöglicht wird. Eine erhöhte Präzision der Verschleißmessung ist somit gewährleistet. Die Fixierung des Messgrößenaufnehmers mit einem nichtmetallischen Material, insbesondere mit einem Kunstharz, sorgt für eine sichere Fixierung des Messgrößenaufnehmers innerhalb des Rezesses, sodass dieser auch nicht bei Entnehmen der Welle, beispielsweise bei entnommenem Ruderschaft, aus dem Rezess herausfallen kann. Darüber hinaus hat das nichtmetallische Material beziehungsweise das Kunstharz eine Abriebfestigkeit, welche geringer als die des ersten Lagerelementes und/oder des zweiten Lagerelementes ist. Dadurch wird vorteilhafterweise gesichert, dass die Verschleißfläche des Messgrößenaufnehmers immer fluchtend mit der Gleitfläche des ersten und/oder zweiten Lagerelementes ist und dass der mit dem Messgrößenaufnehmer gemessene Verschleiß der Verschleißfläche des Messgrößenaufnehmers den Verschleiß des Lagers beziehungsweise der Lagerelemente zutreffend repräsentiert. Jedoch ist es prinzipiell auch möglich, dass die Abriebfestigkeit des Kunstharzes beziehungsweise die Abriebfestigkeit des Messgrößenaufnehmers gleich, größer oder kleiner als die Abriebfestigkeit des ersten und/oder des zweiten Lagerelementes ist.

Eine weiter bevorzugte Weiterbildung des Lagers ist dadurch gekennzeichnet, dass in einer Wandung und/oder Seitenwand der Messgrößenaufnehmeraufnahme oder des Rezesses bevorzugt in den Boden und/oder den Grund der Messgrößenaufnehmeraufnahme oder des Rezesses, eine das Lagerelement durchtretende Öffnung, insbesondere eine Durchgangsbohrung, eingebracht ist, und dass ein Signalleitmittel, insbesondere eine elektrische Leitung oder ein Kabel, des Messgrößenaufnehmers durch die Öffnung hindurchgeführt ist.

Bevorzugt weist die das Lagerelement durchtretende Öffnung einen Durchmesser zwischen 0,5 mm und 5 cm auf, besonders bevorzugt zwischen 1 mm und 2 cm, insbesondere bevorzugt zwischen 5mm und 1 cm.

Der Rezess oder die Messgrößenaufnehmeraufnahme weißt somit einen größeren Durchmesser als die Öffnung oder die Durchgangsbohrung auf. Auch kann sich der Rezess oder die Messgrößenaufnehmeraufnahme in Richtung der Öffnung verjüngen, so dass der Durchmesser des Rezesses oder der Messgrößenaufnehmeraufnahme in der Ebene der Gleitfläche des ersten Lagerelementes größer ist, als der Durchmesser der Öffnung oder Durchgangsbohrung. Hierdurch wird gewährleistet, dass der Rezess oder die Messgrößenaufnehmeraufnahme einen Boden oder einen Grund aufweist, welcher als Anlagefläche für den Messgrößenaufnehmer dienen kann, um ein, insbesondere radiales, Spiel des Messgrößenaufnehmers in dem Rezess zu unterbinden. Bei einem sich verjüngenden Rezess oder einer sich verjüngenden Messgrößenaufnehmeraufnahme wirken die aufeinanderzulaufenden Seitenwände des Rezesses oder der Messgrößenaufnehmeraufnahme als Anlageflächen.

Bevorzugt weist der Rezess oder die Messgrößenaufnehmeraufnahme eine Tiefe auf die zwischen 10% und 90% der Dicke des Lagerelementes, insbesondere des ersten Lagerelementes, entspricht. Besonders bevorzugt weist der Rezess oder die Messgrößenaufnehmeraufnahme eine Tiefe auf die zwischen 20% und 70% der Dicke des Lagerelementes entspricht. Insbesondere bevorzugt weist der Rezess oder die Messgrößenaufnehmeraufnahme eine Tiefe auf die zwischen 30% und 50% der Dicke des Lagerelementes entspricht.

Bevorzugt ist das Signalleitmittel sowohl an den Messgrößenaufnehmer beziehungsweise an die Kontrolleinheit des Messgrößenaufnehmers angeschlossen und ist dazu ausgebildet, die von dem Messgrößenaufnehmer aufgenommenen Messgrößen, insbesondere die den Verschleiß des Messgrößenaufnehmers betreffenden Messgrößen weiterzuleiten. Bevorzugt leitet das Signalleitmittel die Messgrößen des Messgrößenaufnehmers an eine übergeordnete Recheneinheit weiter, welche bevorzugt von mehreren Messgrößenaufnehmern Daten empfängt. Das Signalleitmittel ist zweckmäßig eine elektrische Leitung oder ein Kabel durch das elektrische Signale in analoger oder digitaler Form geleitet werden können, welche die Kontrolleinheit bevorzugt an eine übergeordnete Recheneinheit sendet. Jedoch ist es prinzipiell auch möglich, dass das Signalleitmittel direkt mit dem elektrisch leitfähigen Material, beziehungsweise den Schichten oder Leiterkreisen oder Leiterbahnen verbunden ist, und dass die übergeordnete Recheneinheit beziehungsweise Steuerung direkt und ohne zwischengeschaltete Kontrolleinheiten der Messgrößenaufnehmer den elektrischen Widerstand beziehungsweise einen Kurzschluss der elektrisch leitfähigen Schichten, Leiterkreise oder Leiterbahnen misst. Die Signalleitmittel können auch mit einer Sende- und/oder Empfangseinheit verbunden sein, welche die von der Kontrolleinheit erhaltenen Daten drahtlos an eine übergeordnete Recheneinheit sendet, beziehungsweise Daten und Anweisungen von einer übergeordneten Recheneinheit empfängt und diese an die Kontrolleinheit des Messgrößenaufnehmers weiterleitet. Durch die Öffnung kann auch ein Mittel zur Stromversorgung des Messgrößenaufnehmers oder der Kontrolleinheit des Messgrößenaufnehmers, insbesondere ein elektrisch leitfähiges Kabel oder ein Draht, geführt sein. Bevorzugt ist durch die Öffnung in einer Seitenwand des Rezesses lediglich das Signalleitmittel und gegebenenfalls das Mittel zur Stromversorgung geführt. Insbesondere ist durch die Öffnung kein stiftförmiger Messgrößenaufnehmer geführt.

In einer besonders zweckmäßigen Ausgestaltung der Erfindung ist vorgesehen, dass das erste Lagerelement als Lagerbuchse ausgeführt ist, dass das Lager einen segmentierten Ring aufweist, wobei mindestens eines der Segmente des segmentierten Ringes den mindestens einen Messgrößenaufnehmer umfasst, und dass bevorzugt der segmentierte Ring in einem auf der Innenseite der Lagerbuchse in Umfangsrichtung umlaufenden Rezess angeordnet ist.

Der segmentierte Ring weist bevorzugt eine Innenseite beziehungsweise Innenfläche auf. Das mindestens eine Segment des segmentierten Ringes, welches den mindestens einen Messgrößenaufnehmer umfasst, weist ebenfalls eine Innenseite beziehungsweise eine Innenfläche auf. Die Innenseite beziehungsweise die Innenfläche des Segmentes des segmentierten Ringes, welches den mindestens einen Messgrößenaufnehmer umfasst, ist dabei zumindest teilweise als Verschleißfläche des Messgrößenaufnehmers ausgebildet. Das Segment, welches den mindestens einen Messgrößenaufnehmer umfasst, wird auch Sensorsegment genannt. Durch Vorsehung des segmentierten Ringes und Ausbildung mindestens eines der Segmente des segmentierten Ringes als Sensorsegment ist eine besonders einfache Handhabbarkeit des Messgrößenaufnehmers beziehungsweise des Lagers gegeben. Die Segmente des segmentierten Ringes, welche nicht einen Messgrößenaufnehmer umfassen, werden auch Klemmsegmente genannt. Klemmsegmente und Sensorsegmente wechseln sich bevorzugt über den Umfang des segmentierten Ringes ab. Dabei können die Sensorsegmente und die Klemmsegmente fest aneinander angeordnet sein, jedoch ist es auch möglich, dass die Segmente einzeln in den auf der Innenseite der Lagerbuchse in Umfangsrichtung umlaufenden Rezess eingesetzt beziehungsweise in dem Rezess angeordnet werden. Weiter ist es zweckmäßig, dass sowohl Sensorsegmente als auch Klemmsegmente eine ähnliche, insbesondere die gleiche, Abriebfestigkeit aufweisen, sodass der segmentierte Ring über die gesamte Innenseite oder Innenfläche des segmentierten Ringes ein ähnliches oder gleiches Abriebverhalten und einen in etwa ähnlichen oder gleichen Materialabtrag unter Belastung aufweisen. Die Sensorsegmente und/oder die Klemmsegmente können Bronze aufweisen oder aus Bronze bestehen. Jedoch können die Sensorsegmente und/oder die Klemmsegmente auch andere geeignete Materialien, beispielsweise synthetisches Material oder Kunstharz, aufweisen oder aus diesen bestehen.

Bei einer weiteren zweckmäßigen Ausgestaltung des Lagers ist vorgesehen, dass die Lagerbuchse zweiteilig ausgeführt ist, wobei bevorzugt ein erster Lagerteil und ein zweiter Lagerteil als Teillagerbuchsen mit einer gegenüber der Lagerbuchse verringerten axialen Länge ausgebildet sind, wobei zwischen dem ersten Lagerteil und dem zweiten Lagerteil der segmentierten Ring angeordnet ist, wobei bevorzugt die Lagerteile an ihrer einander zugekehrten Bereichen ein in Umfangsrichtung umlaufendes, bevorzugt L-förmiges, Profil aufweisen, wobei die aneinander angeordneten, bevorzugt L-förmigen, Profile, einen Rezess bilden, in welchem der segmentierte Ring angeordnet.

Durch die bevorzugte Anordnung des segmentierten Ringes in dem Rezess wird für eine axiale Sicherung des segmentierten Ringes im Buchsenverband aus erstem Lagerteil und zweitem Lagerteil gesorgt. Das L-förmige Profil kann dabei bevorzugt durch Ausbildung einer Stufe oder einer Auskehlung bereitgestellt werden. Mit dieser vorteilhaften Ausführungsform ist eine besonders einfache Konstruktion des Lagers ermöglicht. Bevorzugt kann der erste Lagerteil bereitgestellt werden. Daraufhin wird der segmentierte Ring besonders bevorzugt in dem das erste Lagerteil in Umfangsrichtung umlaufende, L-förmigen Profil angeordnet und mit dem ersten Lagerteil wasserdicht verbunden. Danach wird der zweite Lagerteil derart an dem ersten Lagerteil angeordnet werden, dass das das zweite Lagerteil in Umfangsrichtung umlaufende L-förmige Profil ebenfalls an dem segmentierten Ring angeordnet ist. Daraufhin wird auch das zweite Lagerteil wasserdicht mit dem umlaufenden Ring und dem ersten Teillager verbunden. Nach Durchführung dieser Schritte ist somit eine durchgängige, einteilige Lagerbuchse erhältlich, welche einen segmentierten Ring aufweist, wobei mindestens eines der Segmente mindestens einen Messgrößenaufnehmer aufweist. Die Lagerbuchse, bestehend aus erstem Lagerteil, zweitem Lagerteil und segmentiertem Ring kann dann beispielsweise in einem Kokerrohr eines Ruderkokers angeordnet werden. Um einen festen Sitz der Lagerbuchse in dem Kokerrohr des Ruderkokers zu gewährleisten, kann für das Einführen der Lagerbuchse in das Kokerrohr die Lagerbuchse eingeeist werden. Jedoch ist es auch möglich, dass zunächst nur das erste Lagerteil eingeeist wird und in das Kokerrohr eingeführt wird. Daraufhin wird der segmentierte Ring so in das Kokerrohr eingeführt, dass der segmentierte Ring in das das erste Lagerteil in Umfangsrichtung umlaufende, L-förmige Profil aufgenommen ist. Hierfür kann der segmentierte Ring ebenfalls eingeeist werden. Schließlich wird das zweite Lagerteil eingeeist und in das Kokerrohr so eingeführt, dass das das zweite Lagerteil umlaufende, L-förmige Profil an dem segmentierten Ring angeordnet ist. Nach jedem dieser Teilschritte oder nach Durchführung sämtlicher dieser Teilschritte werden die einzelnen Elemente, also erstes Lagerteil und zweites Lagerteil sowie segmentierter Ring untereinander wasserdicht verbunden.

Besonders vorteilhaft an der zweiteiligen Ausgestaltung der Lagerbuchse ist, dass sich nach Anordnung des segmentierten Ringes in dem die Innenseite der Lagerbuchse umlaufenden Rezess der segmentierte Ring umfassend den mindestens einen Messgrößenaufnehmer in einer besonders günstigen Messposition innerhalb des ersten Lagerelementes beziehungsweise der Lagerbuchse befindet.

Alternativ oder zusätzlich wäre es jedoch auch möglich einen segmentierten Ring umfassend mindestens ein Segment mit einem Messgrößenaufnehmer endseitig der Lagerbuchse anzubringen. Jedoch ist die Anbringung des segmentierten Ringes innerhalb der Lagerbuchse von Vorteil, da an den Endseiten der Lagerbuchse generell der Verschleiß häufig nicht so stark ist, wie im Lager selbst.

In einem weiteren Aspekt wird die der Erfindung zugrunde liegende Aufgabe durch eine Lagerspielmessvorrichtung gelöst, insbesondere zur Messung des Lagerspiels eines Lagers, insbesondere Halslagers, eines Ruderschaftes oder eines Ruderblattes, umfassend ein Lager nach einem der vorbeschriebenen Ausführungen, wobei vorgesehen ist, dass die Lagerspielmessvorrichtung eine Recheneinheit aufweist, welche zum Empfang und zur Bearbeitung von Signalen und/oder Informationen des mindestens einen Messgrößenaufnehmers ausgebildet ist.

Die Lagerspielmessvorrichtung kann auch als Verschleißmessvorrichtung oder als Lagerverschleißmessvorrichtung bezeichnet werden.

In vorteilhafter Weise ist die Recheneinheit der Lagerspielmessvorrichtung zum Empfang und zur Bearbeitung von Signalen und/oder Informationen von mindestens zwei Messgrößenaufnehmern ausgebildet. Die Recheneinheit ist bevorzugterweise derart ausgebildet, dass, falls ein erhöhter Verschleiß detektiert wird, eine Warnung oder ein Hinweis beziehungsweise eine Nachricht ausgegeben wird. Die Nachricht kann auf einer Ausgabeeinheit ausgegeben werden und eine optische oder akustische Nachricht umfassen. Auch kann die Recheneinheit eine Speichereinheit aufweisen, sodass der abrasive Verschleiß des Lagers zum Lagern einer Welle durch Speicherung und Auswertung der Daten des mindestens einen Messgrößenaufnehmers lückenlos oder kontinuierlich dokumentiert werden kann. Eine weitere zweckmäßige Fortbildung sieht vor, dass die Recheneinheit der Lagerspielmessvorrichtungen Signale und Informationen an mindestens einen Messgrößenaufnehmer sendet. So kann die Recheneinheit beispielsweise durch Senden eines Signals an einen Messgrößenaufnehmer diesen dazu veranlassen, den aktuellen Verschleiß der Lagerspielmessvorrichtung durch Messung eines elektrischen Widerstandes und/oder eines Kurzschlusses zu bestimmen.

Wird ein Verschleiß der Lagerspielmessvorrichtung beziehungsweise des Lagers zum Lagern einer Welle auf der Ausgabeeinrichtung angezeigt, so können entsprechende Schritte unternommen werden, wie beispielsweise ein Austausch des Lagers zum Lagern einer Welle.

In einem weiteren Aspekt wird das der Erfindung zugrunde liegende Problem durch Vorsehung eines Ruders für ein Schiff, umfassend ein Ruderschaft und ein an dem Ruderschaft angeordnetes Ruderblatt gelöst, wobei vorgesehen ist, dass das Ruder ein Lager in einer der vorbeschriebenen Ausgestaltung und/oder eine vorbeschriebene Lagerspielmessvorrichtung umfasst.

In einer vorteilhaften Weiterbildung des Ruders ist vorgesehen, dass das Ruder einen Ruderkoker umfassend ein Kokerrohr aufweist, dass das Lager zwischen dem Kokerrohr und dem Ruderschaft angeordnet ist, und/oder dass das Lager zwischen dem Kokerrohr und dem Ruderblatt angeordnet ist, und/oder dass das Kokerrohr außenseitig oder innenseitig ein Führungsmittel, insbesondere einen Rezess, eine Nut oder einen Kabelkanal aufweist, und dass ein Signalleitmittel, insbesondere eine elektrische Leitung oder ein Kabel, des Messgrößenaufnehmers in dem Führungsmittel angeordnet ist, derart, dass Signale und/oder Informationen und/oder elektrische Leistung zwischen dem Messgrößenaufnehmer und einer Recheneinheit leitbar beziehungsweise übermittelbar sind.

Durch die vorteilhafte Anordnung des Signalleitmittels im Führungsmittel, beispielsweise in einem ein Kanal, welches innenseitig oder außenseitig auf dem Kokerrohr angeordnet ist, wird verhindert, dass die Signalleitmittel beschädigt werden. Insbesondere wird durch die Verlegung der Signalleitmittel in dem Führungsmittel sichergestellt, dass beim Einführen des Ruderschaftes beziehungsweise beim Drehen des Ruderschaftes und/oder beim Einführen des Ruderkokers in den Schiffsrumpf, die Signalleitmittel, insbesondere die Kabel oder elektrischen Leitungen, nicht beschädigt werden.

Nach einer weiteren vorteilhaften Ausgestaltung ist das Ruder dadurch gekennzeichnet, dass ein bevorzugt als Klemmring ausgebildeter Abstandshalter vorgesehen ist, dass der Abstandshalter bevorzugt an der Innenseite des Kokerrohrs anbringbar ist, derart, dass Beschädigungen des Messgrößenaufnehmers beim Einführen des Ruderschaftes in das Kokerrohr des Ruderkokers vermeidbar sind.

In einem weiteren Aspekt der Erfindung wird vorgeschlagen, dass bei einem Verfahren zur Messung eines Lagerspieles und/oder eines Verschleißes eines Lagers für eine Welle, nämlich für einen Ruderschaft, oder für ein Ruderblatt, durchführbar mit einem Lager nach einer der vorbeschriebenen Ausführungsformen, mit einer vorbeschriebenen Lagerspielmessvorrichtung, oder mit einem Ruder nach einer der vorbeschriebenen Ausführungsformen, mindestens ein nicht stiftförmiger Messgrößenaufnehmer mit einer Kontrolleinheit und mindestens zwei Schichten und/oder Leiterkreisen und/oder Leiterbahnen aus einem elektrisch leitfähigen Material in einem Lager zur Lagerung eines Ruderschaftes oder eines Ruderblattes angeordnet wird, dass der elektrische Widerstand der mindestens zwei Schichten und/oder Leiterkreise und/oder Leiterbahnen gemessen wird, wobei die Kontrolleinheit durch Messung der Änderung des elektrischen Widerstandes mindestens einer der zwei Schichten und/oder Leiterkreise und/oder Leiterbahnen und/oder durch Messung eines Kurzschlusses zwischen zwei im unverschlissenen Zustand des Messgrößenaufnehmers voneinander elektrisch isolierten Schichten und/oder Leiterkreisen und/oder Leiterbahnen einen Verschleiß des Messgrößenaufnehmers detektiert, und dass ein Lagerspiel und/oder ein Verschleiß des Lagers festgestellt wird, wenn ein Verschleiß des Messgrößenaufnehmers detektiert wird.

Das Verfahren ist sowohl zur Ermittlung eines Lagerspiels als auch eines Verschleißes eines Lagers geeignet. Insbesondere wenn das Auftreten eines Lagerspiels durch einen Verschleiß des Lagers verursacht wird, wird durch Messung eines Verschleißes des Lagers das Lagerspiel ermittelt.

In einer vorteilhaften Ausgestaltung des Verfahrens wird vorgeschlagen, dass Messwerte und/oder Messwertsprünge des elektrischen Widerstandes und/oder eines Kurzschlusses gespeichert werden, und/oder dass vor Anordnung des Messgrößenaufnehmers in dem Lager bevorzugt durch Abschleifen der Verschleißfläche des Messgrößenaufnehmers mindestens eine Schicht und/oder ein Leiterkreis und/oder eine Leiterbahn aus einem elektrisch leitfähigen Material durchtrennt wird, und dass eine Referenzmessung und/oder Testmessung des elektrischen Widerstandes und/oder eines Kurzschlusses durchgeführt wird.

Mit besonderem Vorteil kann durch Speicherung der Messwertsprünge oder Messwerte des elektrischen Widerstandes oder des Kurzschlusses eine lückenlose Dokumentation der Entwicklung des Lagerspieles und/oder des Ablaufes des Verschleißes des Lagers zum Lagern einer Welle, insbesondere eines Ruderschaftes, vollzogen werden. Ferner ergibt sich durch Abschleifen der Verschleißfläche des Messgrößenaufnehmers der Vorteil, dass falsche Rückflüsse bei Wechsel zwischen wassergeschmierten und trockenen Lagerbedingungen auftreten können.

### Kurze Beschreibungen der Zeichnungen

Ausführungsbeispiele der Erfindung werden nachstehend anhand der Zeichnungen näher erläutert. Es zeigen:
- Fig. 1: in einer Seitenansicht das Heck eines Schiffes mit einem Lager zum Lagern eines Ruderschaftes,
- Fig. 2: in einer Rückansicht das Heck eines Schiffes mit einem Lager zum Lagern eines Ruderschaftes,
- Fig. 3: in einer Seitenansicht den unteren Endbereich eines Ruderkokers und Ruderschaftes mit einem Lager,
- Fig. 4: in einer Querschnittsansicht den unteren Endbereich eines Ruderkokers und Ruderschaftes mit einem Lager,
- Fig. 5: einen Messgrößenaufnehmer mit einer Verschleißfläche,
- Fig. 6: in einer Seitenansicht den unteren Endbereich eines Ruderkokers mit einem Lager und einem Messgrößenaufnehmer,
- Fig. 7: in einer Querschnittsansicht den unteren Endbereich eines Ruderkokers mit einem Lager und einem Messgrößenaufnehmer,
- Fig. 8: in einer Seitenansicht einen Ruderkoker mit einem Kabelkanal,
- Fig. 9: in einer Seitenansicht den unteren Endbereich eines Ruderkokers mit einer Lagerbuchse und einem segmentierten Ring,
- Fig. 10: in einer Querschnittsansicht den unteren Endbereich eines Ruderkokers mit einer Lagerbuchse und einem segmentierten Ring,
- Fig. 11: eine zweiteilige Lagebuchse mit einem segmentierten Ring,
- Fig. 12: eine zweiteilige Lagebuchse mit einem segmentierten Ring,
- Fig. 13: eine einteilige Lagebuchse mit einem segmentierten Ring,
- Fig. 14: einen Messgrößenaufnehmer mit einer Verschleißfläche in einem verschliessenen Zustand,
- Fig. 15: einen Messgrößenaufnehmer mit einer länglichen Ausgestaltung.

### Bevorzugte Ausführungsform der Erfindung

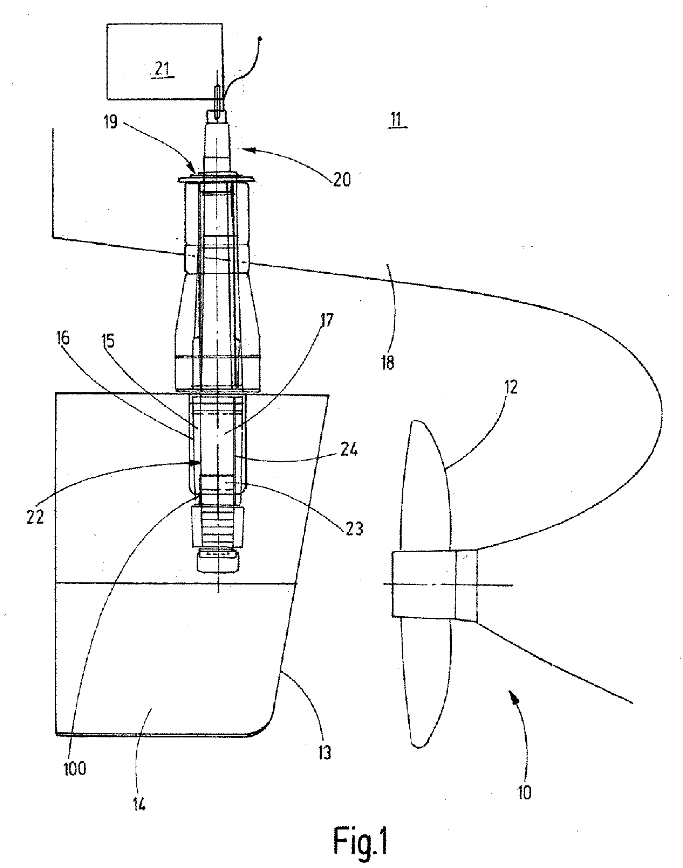

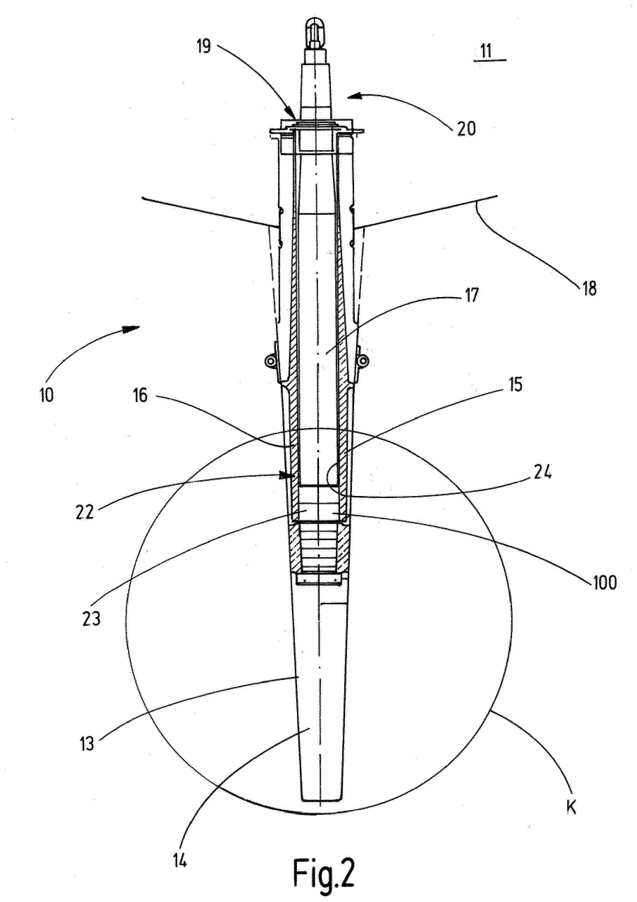

Fig. 1 und 2 zeigen das Heck 10 eines Schiffes 11 umfassend ein Lager 100 zum Lagern eines Ruderschaftes in einer Seitenansicht und in einer Rückansicht. In Fahrtrichtung gesehen hinter einem Propeller 12 ist ein Ruder 13 umfassend ein Ruderblatt 14 angeordnet. In Figur 2 ist der Propeller durch den von den Propellerblättern überstrichenen Propellerkreis K angedeutet. Das Ruderblatt 14 ist an einem drehbar in einem Kokerrohr 15 eines Ruderkokers 16 gelagerten Ruderschaft 17 angeordnet. Der Ruderschaft 17 ist tief in das Ruderblatt 14 hineingezogen. Das Kokerrohr 15 des Ruderkokers 16 ist fest mit dem Schiffsrumpf 18 verbunden. In vertikaler Richtung ist der Ruderschaft 17 mittels eines als Axiallager ausgebildeten Traglagers 19 oberhalb des Kokerrohres 15 gesichert. Der Ruderschaft 17 ist mit einem oberen Endbereich 20 mit einer Rudermaschine 21 verbunden. Der Ruderschaft 17 ist mit einem an einem unteren Endbereich 22 des Ruderschaftes 17 angeordnetem Halslager 23 an dem Kokerrohr 15 des Ruderkokers 16 abgestützt. Das Halslager 23 befindet sich in Umfangsrichtung des Ruderschaftes 17 verlaufend zwischen dem Ruderschaft 17 und der Innenseite 24 des Kokerrohres 15 des Ruderkokers 16. Ein weiteres Halslager könnte gegebenenfalls zur Stützung des oberen Endbereiches 20 des Ruderschaftes 17 vorgesehen sein.

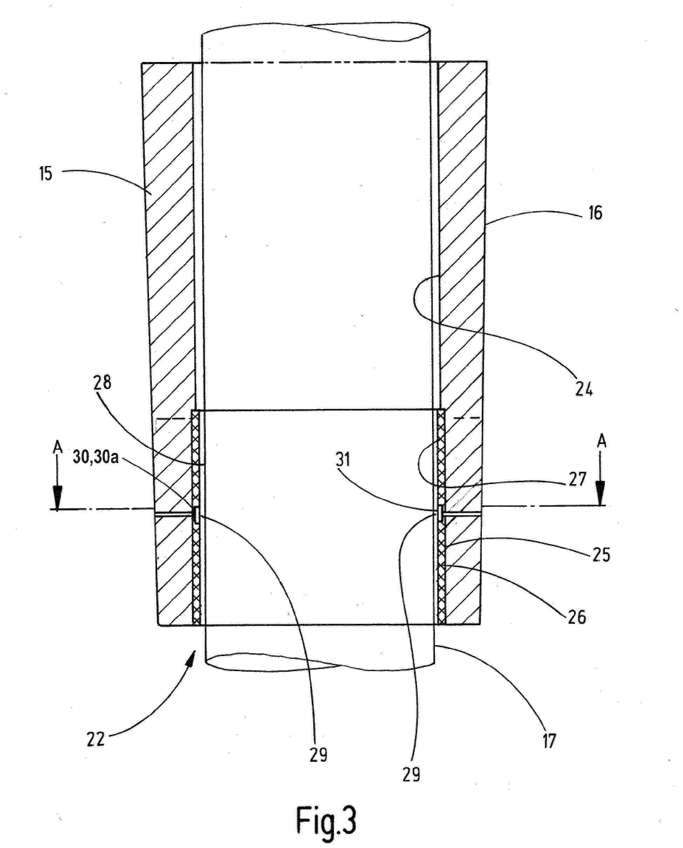

Fig. 3 zeigt eine vergrößerte Darstellung des Ruderkokers 16 und des unteren Endbereiches 22 des Ruderschaftes 17. Zwischen der Innenseite 24 des Kokerrohres 15 des Ruderkokers 16 und dem Ruderschaft 17 ist ein als Lagerbuchse 25 ausgebildetes erstes Lagerelement 26 angeordnet. Das erste Lagerelement 26 weist eine Gleitfläche 27 zur gleitenden Anlage mit einem zweiten Lagerelement 28 auf. Das zweite Lagerelement 28 ist in der dargestellten Ausführungsform als Teil des Ruderschaftes 17 ausgebildet. Messgrößenaufnehmer 29 sind in Rezessen 30 beziehungsweise Messgrößenaufnehmeraufnahmen 30a der Lagerbuchse 25 versenkt angeordnet. Die Messgrößenaufnehmer weisen Verschleißflächen 31 auf.

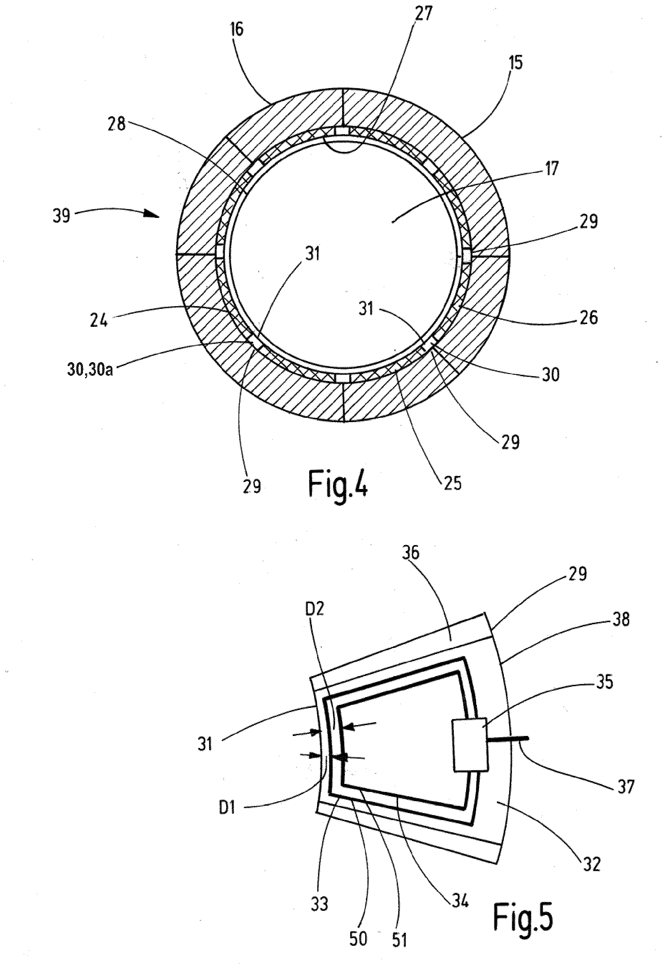

Fig. 4 stellt einen Schnitt durch das Kokerrohr 15 des Ruderkokers 16 entlang der Schnittlinie A-A der Fig. 3 dar. Das als Lagerbuchse 25 ausgebildete erste Lagerelement 26 ist auf der Innenseite 24 des Ruderkokers 16 angeordnet und ist mit der Gleitfläche 27 in gleitender Anlage an dem Ruderschaft 17 angeordnet. In Umfangsrichtung der Lagerbuchse 25 sind in gleichmäßigen Abständen Messgrößenaufnehmer 29 in dazu ausgebildeten Rezessen 30 der Lagerbuchse 25 angeordnet. Die Messgrößenaufnehmer 29 weisen jeweils eine Verschleißfläche 31 auf, mit welchen die Messgrößenaufnehmer 29 in gleitender Anlage mit dem Ruderschaft 17 angeordnet sind. Die Verschleißfläche 31 eines jeden Messgrößenaufnehmers 29 verläuft fluchtend oder bündig mit der Gleitfläche 27 der Lagerbuchse 25. Insbesondere steht die Verschleißfläche 31 nicht radial nach innen über die Gleitfläche 27 der Lagerbuchse 25 hervor. In der dargestellten Ausführungsform sind die Messgrößenaufnehmer 29 in gleichmäßigen Winkelabständen über den Umfang der Lagerbuchse 25 verteilt. Jedoch sind auch Ausführungsformen denkbar, in denen die Abstände unregelmäßig sind.

Fig. 5 zeigt einen Querschnitt durch einen Messgrößenaufnehmer 29. Der Messgrößenaufnehmer 29 weist eine kompakte Form auf und ist insbesondere nicht länglich oder stiftförmig ausgebildet. Der Messgrößenaufnehmer 29 weist eine Platine 32 auf, in welche eine erste Leiterbahn 33 und eine zweite Leiterbahn 34 integriert angeordnet sind. Jedoch können auch mehr als zwei Leiterbahnen beziehungsweise Leiterbahnschleifen vorgesehen sein. Ferner ist auf der Platine 32 eine Kontrolleinheit 35 angeordnet, welche dazu ausgebildet ist, den elektrischen Widerstand der ersten Leiterbahn 33 beziehungsweise der zweiten Leiterbahn 34 zu messen und/oder einen Kurzschluss zwischen der ersten Leiterbahn 33 und der zweiten Leiterbahn 34 festzustellen. Die erste Leiterbahn 33 weist eine in etwa quadratische Form auf und befindet sich bereichsweise in einem Abstand D1 von der Verschleißfläche 31 des Messgrößenaufnehmers 29. Die zweite Leiterbahn 34 weist ebenfalls eine in etwa quadratische Form auf und ist bereichsweise in einem Abstand D2 von der Verschleißfläche 31 angeordnet. Der zweite Abstand D2 ist dabei größer als der erste Abstand D1. Bevorzugt ist die Differenz der Abstände D1 und D2 zwischen 100 µm und 1000 µm und der Abstand D1 der ersten Leiterbahn 33 von der Verschleißfläche 31 beträgt ebenfalls zwischen 100 µm und 1000 µm. Die Platine 32 umfassend erste Leiterbahn 33 und zweite Leiterbahn 34 sowie Kontrolleinheit 35 ist in einem elektrisch nicht leitfähigen Material, wie Kunstharz 36, eingegossen. Die Kontrolleinheit 35 des Messgrößenaufnehmers 29 ist mit einer Signalleitung 37 verbunden, welche auf der der Verschleißfläche 31 gegenüberliegenden Seite 38 aus dem Messgrößenaufnehmer 29 austritt. Über die Signalleitung 37 kann die Kontrolleinheit 35 des Messgrößenaufnehmers 29 mit einer übergeordneten Recheneinheit (nicht dargestellt) des Lagers 100 zum Lagern einer Welle beziehungsweise der Lagerspielmessvorrichtung 39 Informationen und Daten austauschen.

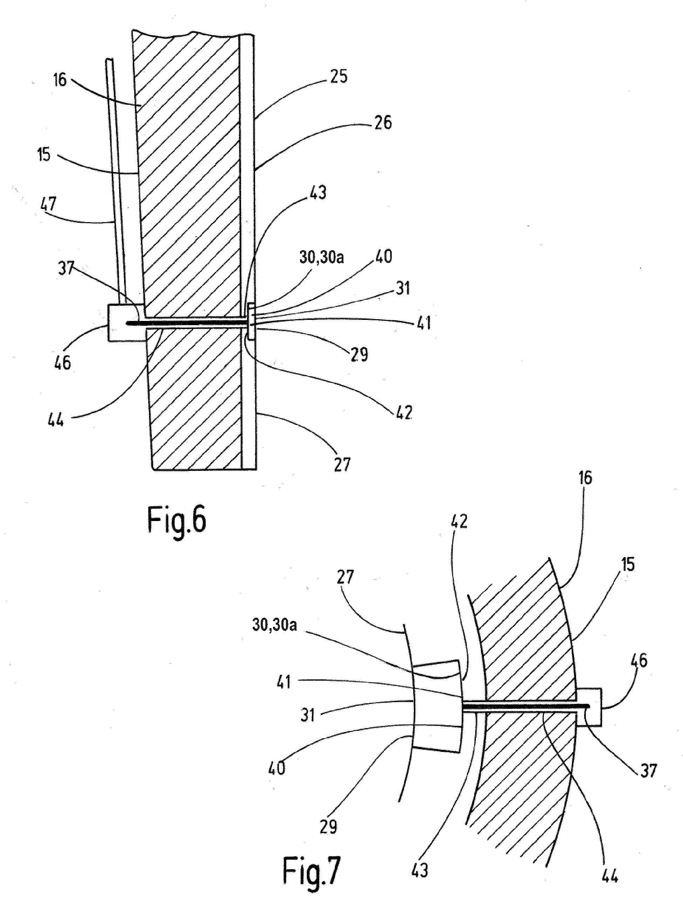

Wie in den Fig. 6 und 7 dargestellt, ist der Rezess 30, in welchen der Messgrößenaufnehmer 29 aufgenommen ist, in Form einer schlitzförmigen Nut 40 ausgebildet. Die Nut 40 hat die Form einer Sackbohrung 41, welche die Lagerbuchse 25 nicht vollständig durchdrängt. Im Boden 42 der Sackbohrung 41 befindet sich eine Durchgangsbohrung 43. In Richtung der Durchgangsbohrung 43 ausgerichtet, befindet sich im Kokerrohr 15 des Ruderkokers 16 ein Bohrkanal 44. Die Signalleitung 37 des Messgrößenaufnehmers 29 ist durch die Durchgangsbohrung 43 zur Außenseite des Kokerrohres 15 des Ruderkokers 16 geführt. Auf der Außenseite 45 des Ruderkokers 16 ist mindestens eine Kabelbox 46 angeordnet, in welche mindestens eine der Signalleitungen 37 der Messgrößenaufnehmer 29 führt. In der Kabelbox 46 können die Signalleitungen 37 gebündelt werden und werden weiter in ein als Kabelkanal 47 ausgebildetes Führungsmittel geführt. Der Messgrößenaufnehmer 29 ist nur von der Seite der Gleitfläche 27 in das erste Lagerelement 26 beziehungsweise die Lagerbuchse 25 einsetzbar und/oder entnehmbar. Der Boden 42 der Sackbohrung 41 verhindert ein Spiel des Messgrößenaufnehmers 29 in radialer Richtung der Lagerbuchse 25. Der Messgrößenaufnehmer 29 liegt dafür an dem als Anlagefläche ausgebildeten Boden 42 der Sackbohrung 41 an.

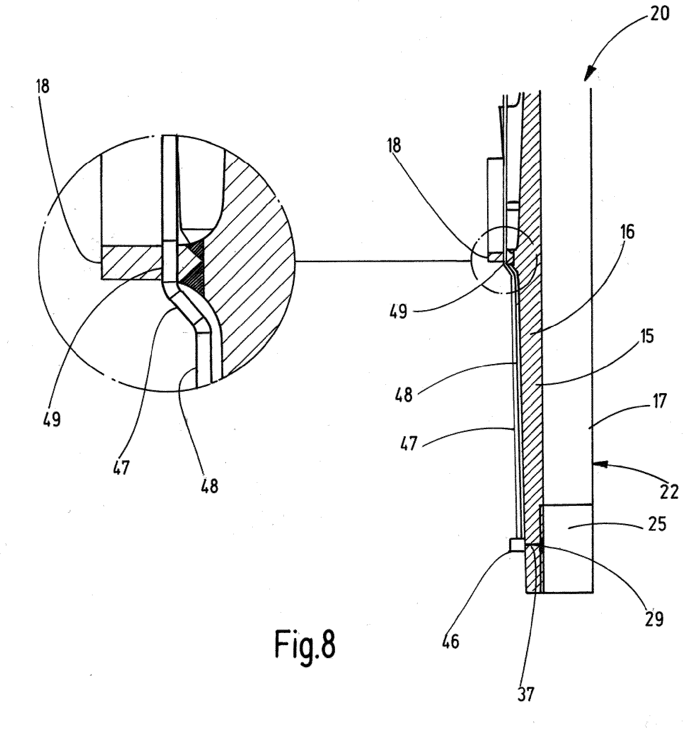

Der Kabelkanal 47 verläuft wie in Fig. 8 dargestellt außenseitig des Kokerrohres 15 des Ruderkokers 16 in vertikaler Richtung bis zum oberen Endbereichsabschnitt 20 des Ruderschaftes 17. Zusätzlich zu den Signalleitungen 37 verlaufen durch den Kabelkanal 47 Stromleitungen 48 zur Leistungsversorgung der Messgrößenaufnehmer 29 und insbesondere der auf den Messgrößenaufnehmer 29 angeordneten Kontrolleinheit 35. Der Ruderkoker 16 ist fest mit dem Schiffsrumpf 18 verschweißt. Im Verbindungsbereich des Schiffsrumpfes 18 mit dem Kokerrohr 15 des Ruderkokers 16 ist eine Rumpfbohrung 49 vorgesehen, durch welche der Kabelkanal 47 in das Innere des Schiffsrumpfes 18 geführt wird. Der Zwischenraum zwischen der Rumpfbohrung 49 und dem Kabelkanal 47 ist wasserdicht abgedichtet.

In Bezug auf die Figuren 4, 5 und 14 wird nun die Funktionsweise der Lagerspielmessvorrichtung 39 beschrieben. Der Messgrößenaufnehmer 29 befindet sich mit der Verschleißfläche 31 in gleitender Anlage mit dem Ruderschaft 17. Die Oberfläche des Ruderschaftes 17 stellt dabei das zweite Lagerelement 28 dar. Durch abrasiven Verschleiß, hervorgebracht durch Drehungen des Ruderschaftes 17 beziehungsweise Auslenkungen des Ruders 13, wird die Verschleißfläche 31 des Messgrößenaufnehmers 29 Schicht um Schicht abgerieben. Sobald eine Schicht der Dicke entsprechend des ersten Abstandes D1 der Verschleißfläche 31 abgerieben ist, liegt die erste Leiterbahn 33 frei beziehungsweise liegt die erste Leiterbahn 33 in der Verschleißfläche 31. Bei weiter fortschreitendem Verschleiß wird die erste Leiterbahn 33 zerrieben und unterbrochen. Sobald die erste Leiterbahn 33 unterbrochen ist, stellt die Kontrolleinheit 35 auf der Platine 32 des ersten Messgrößenaufnehmers 29 bei einem trockenen Lager einen sprunghaften Anstieg des elektrischen Widerstandes fest. Bei weiterem Verschleiß werden weitere Schichten des Kunstharzes 36 des Messgrößenaufnehmers 29 abgerieben, bis zu einer Schichtdicke entsprechend des zweiten Abstandes D2, wonach dann auch die zweite Leiterbahn 34 freiliegt, beziehungsweise in der Verschleißfläche 31 liegt. Bei erneut weiterem Abrieb wird schließlich auch die zweite Leiterbahn 34 durchgerieben und ein sprunghafter Anstieg des elektrischen Widerstandes der zweiten Leiterbahn 34 kann durch die Kontrolleinheit 35 festgestellt werden. Bei einem trockenen Lager 23 können diese Sprünge in dem elektrischen Widerstand als Messwerte für einen Abrieb des Messgrößenaufnehmers 29 und damit für einen Verschleiß der Lagerbuchse 25 gewertet werden. Liegt hingegen ein wassergeschmiertes Lager 23 vor, so kann aufgrund der Leitfähigkeit von Meerwasser nicht zweifelsfrei ein Durchtrennen der ersten Leiterbahn 33 beziehungsweise zweiten Leiterbahn 34 gemessen werden, da das elektrisch leitfähige Meerwasser die Weiterleitung des elektrischen Stromes anstelle der ersten Leitbahn 33 und der zweiten Leiterbahn 34 übernimmt.

Hierzu ist die Kontrolleinheit 35 dazu ausgebildet, einen Kurzschluss zwischen erster Leiterbahn 33 und zweiter Leiterbahn 34 festzustellen. Wurde die Verschleißfläche 31 um eine Schichtdicke entsprechend des zweiten Abstandes D2 abgerieben, und liegen somit Teile der ersten Leiterbahn 33 und der zweiten Leiterbahn 34 frei, so kommen die Endbereiche 50, 51 der Leiterbahnen 33, 34 entweder durch direkte Berührung oder vermittels des die Verschleißfläche 31 benetzenden, elektrisch leitfähigen Meerwasser miteinander in elektrischen Kontakt und verursachen einen Kurzschluss zwischen der ersten Leiterbahn 33 und der zweiten Leiterbahn 34. Dieser Kurzschluss ist unzweideutig durch die Kontrolleinheit 35 feststellbar und wird als Messgröße der Messwert durch die Signalleitung 37 an eine übergeordnete Recheneinheit geleitet, welche aufgrund der Messwerte den Verschleiß des Messgrößenaufnehmers 29 und damit des Lagers 23 feststellt.

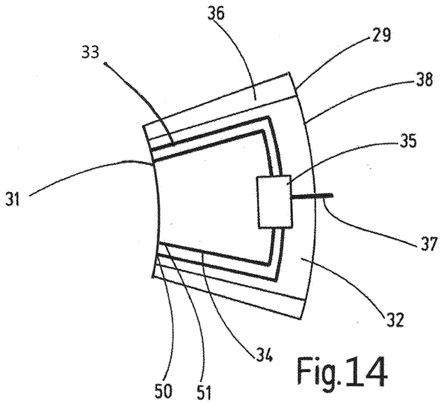

Diesbezüglich ist in Fig. 14 der Fall dargestellt, in dem die Verschleißfläche 31 des Messgrößenaufnehmers 29 durch abrasiven Verschleiß soweit abgerieben wurde, dass die erste Leiterbahn 33 und die zweite Leiterbahn 34 freiliegen beziehungsweise durchgerieben wurden. Mit anderen Worten ist die Verschleißfläche 31 verschleißbedingt soweit in radialer Richtung nach außen in Richtung der Kontrolleinheit 35 um etwa die Schichtdicke entsprechend des zweiten Abstandes D2 zurückgewichen, dass die beiden Endbereiche 50, 51 der ersten Leiterbahn 33 und der zweiten Leiterbahn 34 in der Verschleißfläche 31 liegen beziehungsweise an die Verschleißfläche 31 angrenzen oder aus der Verschleißfläche 31 herausragen, sodass die Endbereiche 50, 51 im Falle eines wassergeschmierten Lagers zumindest teilweise in Kontakt mit die Verschleißfläche 31 benetzendes Meerwasser kommen. Aufgrund der elektrischen Leitfähigkeit des Meerwassers wird ein Kurzschluss zwischen den Endbereichen 50, 51 der ersten Leiterbahn 33 und der zweiten Leiterbahn 34 hergestellt, welcher von der Kontrolleinheit 35 feststellbar ist.

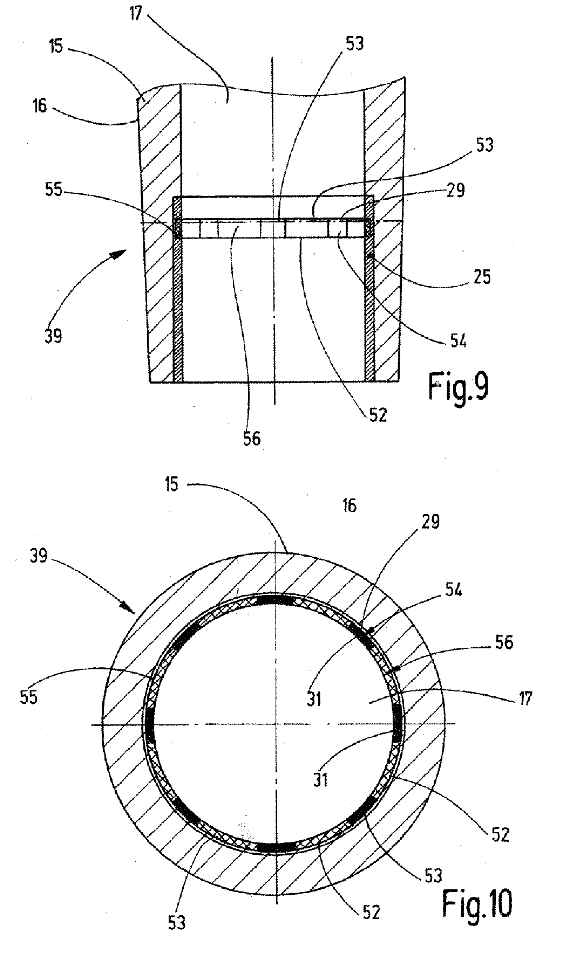

In den Figuren 9 und 10 ist eine alternative Ausführungsform der Lagerspielmessvorrichtung 39 dargestellt. Die Lagerspielmessvorrichtung 39 weist einen segmentierten Ring 52 auf, welcher aus mehreren Ringsegmenten 53 zusammengesetzt ist. Ein Ringsegment 53 ist als Sensorsegment 54 ausgebildet und umfasst einen Messgrößenaufnehmer 29. Der segmentierte Ring 52 ist in einer in Umfangsrichtung umlaufenden Nut 55 in der Lagerbuchse 25 angeordnet. Zur Sicherung des Sensorsegmentes 54 sind bei dem segmentierten Ring 52 Klemmsegmente 56 vorgesehen, welche zusammen mit den Sensorsegmenten 54 den segmentierten Ring 52 vervollständigen.

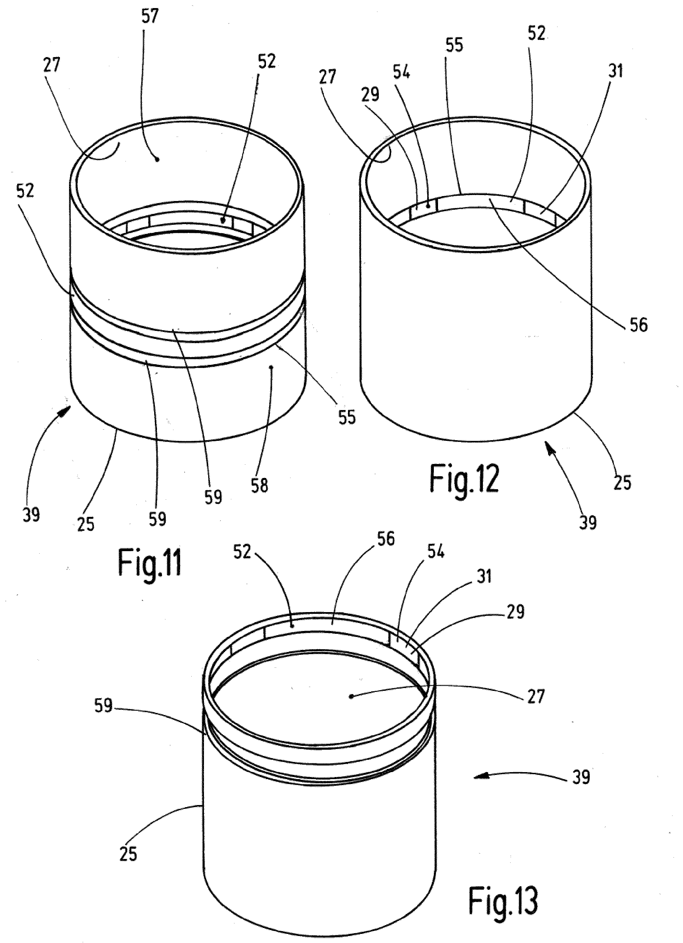

In den Figuren 11 und 12 ist gezeigt, wie der segmentierte Ring 52 in der Lagerbuchse 25 befestigt wird. Die Lagerbuchse 25 ist dazu zweiteilig ausgeführt und weist einen ersten Lagerteil 57 sowie einen zweiten Lagerteil 58 auf. Der erste Lagerteil 57 und der zweite Lagerteil 58 weisen jeweils in ihren einander zugekehrten Bereichen ein in Umfangsrichtung umlaufendes L-förmiges Profil 59 auf, welche bei einander angeordnetem ersten Lagerteil 57 und zweiten Lagerteil 58 eine die Lagerbuchse 25 in Umfangsrichtung umlaufende ringförmige Nut 55 ausbilden. Der segmentierte Ring 52 wird in dem L-förmigen Profil 59 des ersten Lagerteils 57 angeordnet und wasserdicht mit diesem verbunden. Daraufhin wird das zweite Lagerteil 58 derart an dem ersten Lagerteil 57 angeordnet, dass der segmentierte Ring 52 in dem L-förmigen Profil 59 des zweiten Lagerteils 58 angeordnet ist. Durch diese Anordnung des ersten und zweiten Lagerteils 57, 58 bilden die L-förmigen Profile 59 des ersten Lagerteils 57 und des zweiten Lagerteils 58 zusammen einen die Lagerbuchse 25 in Umfangsrichtung umlaufende Nut 55, in welcher der segmentierte Ring 52 umfassend Sensorsegmente 54 und Klemmsegmente 56 angeordnet ist. Die Lagerbuchse 25 kann beispielsweise durch Eineisen im Ruderkoker 16 angeordnet werden.

Figur 13 zeigt eine weitere Ausführungsform der Lagerspielmessvorrichtung 39. Bei der dargestellten Ausführungsform ist die Lagerbuchse 25 einteilig ausgebildet und besitzt endseitig einen in Umfangsrichtung umlaufendes, L-förmiges Profil 59, in welchem der segmentierte Ring 52 angeordnet werden kann. In dieser Ausführungsform befindet sich der segmentierte Ring 52, umfassend der

Messgrößenaufnehmer 29 somit oberhalb oder unterhalb der Lagerbuchse 25 und nicht in axialer Richtung gesehen mittig in der Lagerbuchse 25.

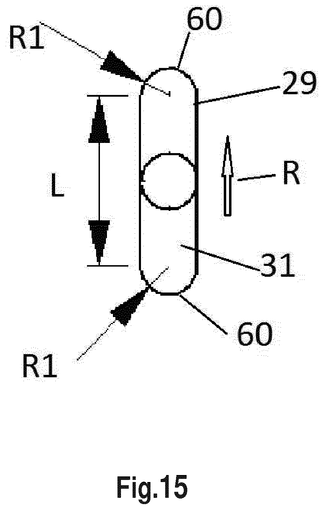

Fig. 15 zeigt einen Messgrößenaufnehmer 29 mit einer im Wesentlichen länglichen Ausgestaltung. Die Verschleißfläche 31 des Messgrößenaufnehmers 29 ist nicht an einer der Stirnseiten 60, beziehungsweise nicht an einer der Seiten, Außenseiten oder Ebenen, welche senkrecht zur Richtung R der länglichen Ausgestaltung stehen, angeordnet. In der Ausgestaltung des Messgrößenaufnehmers 29 nach Fig. 15 ist dieser besonders geeignet, in eine Messgrößenaufnehmeraufnahme 30a oder einen Rezess 30 in Form einer schlitzförmigen oder länglichen Sackbohrung 41 oder Nut 40 oder Auskehlung oder Stufe, welche bevorzugt in Längsrichtung des ersten Lagerelementes 26 in der Gleitfläche 27 angeordnet ist, eingesetzt zu werden oder zu sein. Die Stirnseiten 60 des Messgrößenaufnehmers 29 weisen einen abgerundeten Verlauf unter einem Krümmungsradius R1 auf. Der Krümmungsradius kann bevorzugt zwischen 2 und 20 mm, besonders bevorzugt zwischen 5 und 10 mm betragen. Die Länge L des Messgrößenaufnehmers 29 in Richtung R der länglichen Ausgestaltung zwischen den abgerundeten Stirnseiten 60 beträgt bevorzugt zwischen 20 und 40 mm, besonders bevorzugt etwa 30 mm. Der Messgrößenaufnehmer 29 der Fig. 15 ist ansonsten identisch mit den vorbeschriebenen Messgrößenaufnehmern und kann insbesondere auch in jeder der in den Figuren 2 bis 14 gezeigten Vorrichtungen verwendet werden.

### Liste der Bezugszeichen

- 100: Lager zum Lagern einer Welle

- 10: Heck
- 11: Schiff
- 12: Propeller
- 13: Ruder
- 14: Ruderblatt
- 15: Kokerrohr
- 16: Ruderkoker
- 17: Ruderschaft
- 18: Schiffsrumpf
- 19: Traglager

- 20: Oberer Endbereich
- 21: Rudermaschine
- 22: Unterer Endbereich
- 23: Halslager
- 24: Innenseite des Ruderkokers
- 25: Lagerbuchse
- 26: Erstes Lagerelement
- 27: Gleitfläche
- 28: Zweites Lagerelement
- 29: Messgrößenaufnehmer

- 30: Rezess
- 30a: Messgrößenaufnehmeraufnahme
- 31: Verschleißfläche
- 32: Platine
- 33: Erste Leiterbahn
- 34: Zweite Leiterbahn
- 35: Kontrolleinheit
- 36: Kunstharz
- 37: Signalleitung
- 38: Der Verschleißfläche gegenüberliegende Seite
- 39: Lagerspielmessvorrichtung

- 40: Nut
- 41: Sackbohrung
- 42: Boden
- 43: Durchgangsbohrung
- 44: Bohrkanal
- 45: Außenseite
- 46: Kabelbox
- 47: Kabelkanal
- 48: Stromleitung
- 49: Rumpfbohrung

- 50: Erster Endbereich
- 51: Zweiter Endbereich
- 52: Segmentierter Ring
- 53: Ringssegment
- 54: Sensorsegment
- 55: Nut
- 56: Klemmsegment
- 57: Erster Lagerteil
- 58: Zweiter Lagerteil
- 59: L-förmiges Profil
- 60: Stirnseite

- K: Propellerkreis
- D1: Erster Abstand
- D2: Zweiter Abstand
- R: Richtung der länglichen Ausgestaltung
- R1: Krümmungsradius
- L: Länge

## Patentansprüche

1. Lager zum Lagern eines Ruderschaftes (17) oder eines Ruderblattes (14) umfassend ein erstes Lagerelement (26) und ein zweites Lagerelement (28), wobei das erste Lagerelement (26) eine Gleitfläche (27) zur gleitenden Anlage mit dem zweiten Lagerelement (28) aufweist, und mindestens einen Messgrößenaufnehmer (29) mit einer Verschleißfläche (31) zur gleitenden Anlage mit dem zweiten Lagerelement (28),
**dadurch gekennzeichnet,**
**dass** der mindestens eine Messgrößenaufnehmer (29) nicht stiftförmig ausgebildet ist, dass der Messgrößenaufnehmer (29) ein elektrisch leitfähiges Material aufweist, dass das elektrisch leitfähige Material zur Messung des Verschleißes des Messgrößenaufnehmers (29) im Bereich der Verschleißfläche (31) angeordnet ist, dass das elektrisch leitfähige Material als mindestens eine Schicht oder Leiterschicht und/oder mindestens ein Leiterkreis und/oder mindestens eine Leiterbahn (33, 34) ausgebildet ist, dass der Messgrößenaufnehmer (29) eine Kontrolleinheit (35) umfasst, wobei die Kontrolleinheit (35) dazu ausgebildet ist, durch Messung der Änderung des elektrischen Widerstandes und/oder durch Messung eines Kurzschlusses zwischen zwei im unverschlissenen Zustand des Messgrößenaufnehmers (29) voneinander elektrisch isolierten Schichten und/oder Leiterkreisen und/oder Leiterbahnen (33, 34) einen Verschleiß des Messgrößenaufnehmers (29) zu detektieren.

2. Lager nach Anspruch 1,
**dadurch gekennzeichnet,**
**dass** die Verschleißfläche (31) des Messgrößenaufnehmers (29) entsprechend eines Ausschnittes der Mantelfläche eines Zylinders oder eines Kegels ausgebildet ist.

3. Lager nach Anspruch 1 oder 2,
**dadurch gekennzeichnet,**
**dass** in der Gleitfläche (27) des ersten Lagerelementes (26) eine Messgrößenaufnehmeraufnahme (30a) oder ein Rezess (30), insbesondere eine, bevorzugt schlitzförmige, Sackbohrung (41) oder eine Nut (40) oder eine Auskehlung oder eine Stufe, angeordnet ist, dass der mindestens eine Messgrößenaufnehmer (29) in der Messgrößenaufnehmeraufnahme (30a) oder dem Rezess (30) angeordnet ist, und dass der Messgrößenaufnehmer (29) ausschließlich von der Seite der Gleitfläche (27) in die Messgrößenaufnehmeraufnahme (30a) einsetzbar und/oder aus der Messgrößenaufnehmeraufnahme (30a) entnehmbar ist.

4. Lager nach einem der vorgenannten Ansprüche,
**dadurch gekennzeichnet,**
**dass** das erste Lagerelement (26) eine Lagerbuchse (25) ist, und/oder dass das erste Lagerelement (26) auf der Innenseite (24), insbesondere der Innenwand, eines Kokerrohres (15) eines Ruderkokers(16) anordbar ist, und/oder dass das erste Lagerelement (26) auf der Außenseite des Kokerrohres (15) des Ruderkokers(16) anordbar ist, und/oder dass das zweite Lagerelement (28) auf einem Ruderschaft (17) anordbar ist oder als Teil eines Ruderschaftes (17) ausbildbar ist, und/oder dass das zweite Lagerelement (28) an einem Ruderblatt (14) eines Ruders (13) anordbar ist, und/oder dass das Lager zwischen dem Kokerrohr (15) und dem Ruderschaft (17) anordbar ist, und/oder dass das Lager zwischen dem Kokerrohr (15) und dem Ruderblatt (14) anordbar ist.

5. Lager nach einem der vorgenannten Ansprüche,
**dadurch gekennzeichnet,**
**dass** das elektrisch leitfähige Material als mindestens zwei Schichten und/oder als mindestens zwei Leiterkreise und/oder als mindestens zwei Leiterbahnen (33, 34) ausgebildet ist, wobei in einem unverschlissenen Zustand des Messgrößenaufnehmers (29) die mindestens zwei Schichten oder Leiterschichten und/oder die mindestens zwei Leiterkreise und/oder die mindestens zwei Leiterbahnen (33, 34) elektrisch voneinander isoliert sind,
wobei bevorzugt die mindestens zwei Schichten oder Leiterschichten und/oder Leiterkreise und/oder Leiterbahnen (33, 34) einen unterschiedlichen Abstand (D1, D2) zu der Verschleißfläche (31) aufweisen, und/oder wobei bevorzugt die mindestens zwei Schichten oder Leiterschichten und/oder Leiterkreise und/oder Leiterbahnen (33, 34) benachbart voneinander, bevorzugt in einem Abstand (D1, D2) von 100 µm bis 1000 µm, angeordnet sind.

6. Lager nach einem der vorgenannten Ansprüche,
**dadurch gekennzeichnet,**
**dass** das elektrisch leitfähige Material in einem Träger, insbesondere einer Platine (32) oder einer Leiterplatte, angeordnet ist, und/oder dass das elektrisch leitfähige Material und/oder der Träger in einem nichtmetallischen Material, insbesondere in einem Kunstharz (36), angeordnet beziehungsweise eingegossen ist.

7. Lager nach einem der Ansprüche 3 bis 6,
**dadurch gekennzeichnet,**
**dass** der Messgrößenaufnehmer (29) mit einem nicht-metallischen Material, insbesondere mit einem Kunstharz (36), in der Messgrößenaufnehmeraufnahme (30a) oder dem Rezess (30) fixiert ist.

8. Lager nach einem der Ansprüche 3 bis 7,
**dadurch gekennzeichnet,**
**dass** in eine Wandung und/oder Seitenwand der Messgrößenaufnehmeraufnahme (30a) oder des Rezesses (30), bevorzugt in den Boden (42) und/oder den Grund der Messgrößenaufnehmeraufnahme (30a) oder des Rezesses (30), eine das erste und/oder das zweite Lagerelement (26, 28) durchtretende Öffnung, insbesondere eine Durchgangsbohrung (43), eingebracht ist, und dass ein Signalleitmittel, insbesondere eine elektrische Leitung oder ein Kabel, des Messgrößenaufnehmers (29) durch die Öffnung hindurch geführt ist.

9. Lagerspielmessvorrichtung (39), insbesondere zur Messung des Lagerspiels eines Lagers, insbesondere Halslagers (23), eines Ruderschaftes (17) oder eines Ruderblattes (14), umfassend ein Lager nach einem der vorgenannten Ansprüche,
**dadurch gekennzeichnet,**
**dass** die Lagerspielmessvorrichtung (39) eine Recheneinheit aufweist, welche zum Empfang und zur Verarbeitung von Signalen und/oder Informationen des mindestens einen Messgrößenaufnehmers (29) ausgebildet ist.

10. Ruder (13) für ein Schiff umfassend ein Ruderschaft (17) und ein an dem Ruderschaft (17) angeordnetes Ruderblatt (14),
**dadurch gekennzeichnet,**
**dass** das Ruder (13) ein Lager nach einem der Ansprüche 1 bis 8 und/oder eine Lagerspielmessvorrichtung (39) nach Anspruch 9 umfasst.

11. Ruder (13) nach Anspruch 10,
**dadurch gekennzeichnet,**
**dass** das Ruder (13) einen Ruderkoker(16) umfassend ein Kokerrohr (15) aufweist, dass das Lager zwischen dem Kokerrohr (15) und dem Ruderschaft (17) angeordnet ist, und/oder dass das Lager zwischen dem Kokerrohr (15) und dem Ruderblatt (14) angeordnet ist, und/oder dass das Kokerrohr (15) aussenseitig oder innenseitig ein Führungsmittel, insbesondere einen Rezess (30), eine Nut (40) oder einen Kabelkanal (47) aufweist, und dass ein Signalleitmittel, insbesondere eine elektrische Leitung oder ein Kabel, des Messgrößenaufnehmers (29) in dem Führungsmittel angeordnet ist, derart, dass Signale und oder Informationen zwischen dem Messgrößenaufnehmer (29) und einer Recheneinheit leitbar beziehungswiese übermittelbar sind.

12. Ruder (13) nach Anspruch 11,
**dadurch gekennzeichnet,**
**dass** ein, bevorzugt als Klemmringe ausgebildeter, Abstandshalter vorgesehen ist, dass der Abstandshalter bevorzugt an der Innenseite (24) des Kokerrohres anbringbar ist, derart, dass Beschädigungen des Messgrößenaufnehmers (29) beim Einführen des Ruderschaftes (17) in das Kokerrohr (15) des Ruderkokers (16) vermeidbar sind.

13. Verfahren zur Messung eines Lagerspieles und/oder eines Verschleißes eines Lagers für einen Ruderschaft (17) oder für ein Ruderblatt (14) durchführbar mit einem Lager nach einem der Ansprüche 1 bis 8, mit einer Lagerspielmessvorrichtung (39) nach Anspruch 9 oder mit einem Ruder (13) nach einem der Ansprüche 10 bis 12,
**dadurch gekennzeichnet,**
**dass** mindestens ein nicht stiftförmiger Messgrößenaufnehmer (29) mit einer Kontrolleinheit (35) und mindestens zwei Schichten und/oder Leiterkreisen und/oder Leiterbahnen (33, 34) aus einem elektrisch leitfähigen Material in einem Lager zur Lagerung eines Ruderschaftes (17) oder eines Ruderblattes (14) angeordnet wird, dass der elektrische Widerstand der mindestens zwei Schichten und/oder Leiterkreise und/oder Leiterbahnen (33, 34) gemessen wird, wobei die Kontrolleinheit (35) durch Messung der Änderung des elektrischen Widerstandes mindestens einer der zwei Schichten und/oder Leiterkreise und/oder Leiterbahnen und/oder durch Messung eines Kurzschlusses zwischen zwei im unverschlissenen Zustand des Messgrößenaufnehmers (29) voneinander elektrisch isolierten Schichten und/oder Leiterkreisen und/oder Leiterbahnen (33, 34) einen Verschleiß des Messgrößenaufnehmers (29) detektiert, und dass ein Lagerspiel und/oder ein Verschleiß des Lagers festgestellt wird, wenn ein Verschleiß des Messgrößenaufnehmers (29) detektiert wird.

14. Verfahren nach Anspruch 13,
**dadurch gekennzeichnet,**
**dass** Messwerte und/oder Messwertsprünge des elektrischen Widerstandes und/oder eines Kurzschlusses gespeichert werden, und/oder dass vor Anordnung des Messgrößenaufnehmers (29) in dem Lager bevorzugt durch Abschleifen der Verschleißfläche (31) des Messgrößenaufnehmers (29) mindestens eine Schicht und/oder ein Leiterkreis und/oder eine Leiterbahn (33, 34) aus einem elektrisch leitfähigen Material durchtrennt wird, und dass eine Referenzmessung und/oder Testmessung des elektrischen Widerstandes und/oder eines Kurzschlusses durchgeführt wird.

## Claims

1. Bearing for a rudder stock (17) or a rudder blade (14), comprising a first bearing element (26) and a second bearing element (28), wherein the first bearing element (26) has a sliding surface (27) for sliding contact with the second bearing element (28), and at least one transducer (29) having a wear surface (31) for sliding contact with the second bearing element (28),
**characterized in that**
the at least one transducer (29) is not formed pin-shaped, that the transducer (29) has an electrically conductive material, that the electrically conductive material is arranged for measuring the wear of the transducer (29) in the region of the wear surface (31), that the electrically conductive material is formed as at least one layer or conductor layer and / or at least one conductor circuit and / or at least one conductor track (33, 34), that the transducer (29) comprises a control unit (35), wherein the control unit (35) is configured to detect wear of the transducer (29) by measuring the change in electrical resistance and / or by measuring a short circuit between two layers and / or conductor circuits and / or conductor tracks (33, 34) that are electrically isolated from each other in the unworn state of the transducer (29).

2. The bearing according to claim 1,
**characterized in that**
the wear surface (31) of the transducer (29) is formed corresponding to a section of the surface area of a cylinder or a cone.

3. The bearing according to claim 1 or 2,
**characterized in that**
a transducer receptacle (30a) or a recess (30) is arranged in the sliding surface (27) of the first bearing element (26), in particular a, preferably slot-shaped, blind hole (41) or a groove (40) or a hollowing or a step, that the at least one transducer (29) is arranged in the transducer receptacle (30a) or the recess (30), and that the transducer (29) can be inserted into the transducer receptacle (30a) or removed from the transducer receptacle (30a) exclusively from the side of the sliding surface (27).

4. The bearing according to one of the preceding claims,
**characterized in that**
the first bearing element (26) is a bearing bush (25), and / or that the first bearing element (26) can be arranged on the inside (24), in particular the inner wall of a trunk tube (15) of a rudder trunk (16), and / or **in that** the first bearing element (26) can be arranged on the outside of the trunk tube (15) of the rudder trunk (16), and / or that the second bearing element (28) can be arranged on a rudder stock (17) or can be formed as part of a rudder stock (17), and / or that the second bearing element (28) can be arranged on a rudder blade (14) of a rudder (13), and / or that the bearing can be arranged between the trunk tube (15) and the rudder stock (17), and / or that the bearing can be arranged between the trunk tube (15) and the rudder blade (14).

5. The bearing according to one of the preceding claims,
**characterized in that**
the electrically conductive material is formed as at least two layers and / or as at least two conductor circuits and / or as at least two conductor tracks (33, 34), wherein in an unworn state of the transducer (29) the at least two layers or conductor layers and / or the at least two conductor circuits and / or the at least two conductor tracks (33, 34) are electrically insulated from one another,
wherein preferably the at least two layers or conductor layers and / or conductor circuits and / or conductor tracks (33, 34) have a different distance (D1, D2) to the wear surface (31), and / or wherein preferably the at least two layers or conductor layers and / or conductor circuits and / or conductor tracks (33, 34) are arranged adjacent to each other, preferably at a distance (D1, D2) of 100 µm to 1000 µm.

6. The bearing according to one of the preceding claims,
**characterized in that**
the electrically conductive material is arranged in a carrier, in particular a circuit board (32) or a printed circuit board, and / or
**in that** the electrically conductive material and / or the carrier is arranged or cast in a non-metallic material, in particular in a synthetic resin (36).

7. The bearing according to one of claims 3 to 6,
**characterized in that**
the transducer (29) is fixed with a non-metallic material, in particular with a synthetic resin (36), in the transducer receptacle (30a) or the recess (30).

8. The bearing according to one of claims 3 to 7,
**characterized in that**
in a wall and / or side wall of the transducer receptacle (30a) or the recess (30), preferably in the bottom (42) and / or the base of the transducer receptacle (30a) or the recess (30), an opening passing through the first and / or the second bearing element (26, 28), in particular a through hole (43), is introduced, and **in that** a signal conducting means, in particular an electrical line or a cable, of the transducer (29) is guided through the opening.

9. A bearing clearance measuring device (39), in particular for measuring the bearing clearance of a bearing, in particular a neck bearing (23), a rudder stock (17), or a rudder blade (14), comprising a bearing according to one of the preceding claims,
**characterized in that**
the bearing clearance measuring device (39) has a computing unit, which is configured for receiving and for processing signals and / or information of the at least one transducer (29).

10. A rudder (13) for a ship comprising a rudder stock (17) and a rudder blade (14) arranged on the rudder stock (17),
**characterized in that**
the rudder (13) comprises a bearing according to any one of claims 1 to 8 and / or a bearing clearance measuring device (39) according to claim 9.

11. The rudder (13) according to claim 10,
**characterized in that**
the rudder (13) has a rudder trunk (16) comprising a trunk tube (15), that the bearing is arranged between the trunk tube (15) and the rudder stock (17), and / or that the bearing is arranged between the trunk tube (15) and the rudder blade (14), and / or that the trunk tube (15) on the outside or inside has a guide means, in particular a recess (30), a groove (40) or a cable channel (47), and that a signal conducting means, in particular an electrical line or a cable, of the transducer (29) is arranged in the guide means in such a way that signals and or information can be conducted or transmitted between the transducer (29) and a computing unit.

12. The rudder (13) according to claim 11,
**characterized in that**
a spacer, preferably designed as clamping rings, is provided, that the spacer can preferably be attached to the inside (24) of the trunk tube in such a way that damage to the transducer (29) during insertion of the rudder stock (17) into the trunk tube (15) of the rudder trunk (16) are avoidable.

13. Method for measuring a bearing clearance, and / or wear of a bearing for a rudder stock (17) or for a rudder blade (14), which can be carried out with a bearing according to one of claims 1 to 8, with a bearing clearance measuring device (39) according to claim 9 or with a rudder (13) according to any one of claims 10 to 12, **characterized in that**
at least one non-pin-shaped transducer (29) with a control unit (35) and at least two layers and / or conductor circuits and / or conductor tracks (33, 34) made of an electrically conductive material is arranged in a bearing for bearing a rudder stock (17) or a rudder blade (14), that the electrical resistance of the at least two layers and / or conductor circuits and / or conductor tracks (33, 34) is measured, wherein the control unit (35) detects wear of the transducer (29) by measuring the change of the electrical resistance of at least one of the two layers and / or conductor circuits and / or conductor tracks (33, 34) and / or by measuring a short circuit between two layers and / or conductor circuits and / or conductor tracks (33, 34) electrically isolated from each other in the unworn state of the transducer (29), and that a bearing clearance and / or wear of a bearing is detected when wear of the transducer (29) is detected.

14. A method according to claim 13,
**characterized in that**
measured values and / or measured value jumps of the electrical resistance and / or a short circuit are stored, and / or **in that** prior to the arrangement of the transducer (29) in the bearing at least one layer and / or a conductor circuit and / or a conductor track (33, 34) made from an electrically conductive material is severed, preferably by abrading the wear surface (31) of the transducer (29), and that a reference measurement and / or test measurement of the electrical resistance and / or a short circuit is performed.

## Revendications

1. Palier servant de support à une mèche de gouvernail (17) ou un safran de gouvernail (14) comprenant un premier élément de palier (26) et un deuxième élément de palier (28), sachant que le premier élément de palier (26) comporte une surface de glissement (27) pour appui de glissement avec le deuxième élément de palier (28) et au moins un enregistreur de grandeurs de mesure (29) avec une surface d'usure (31) pour appui de glissement avec le deuxième élément de palier (28)
**caractérisé en ce que**
l'au moins un enregistreur de grandeurs de mesure (29) n'est pas constitué en forme de tige, **en ce que** l'enregistreur de grandeurs de mesure (29) comporte un matériau électro-conducteur, **en ce que** le matériau électro-conducteur pour la mesure de l'usure de l'enregistreur de grandeurs de mesure (29) est disposé dans la zone de la surface d'usure (31), **en ce que** le matériau électro-conducteur est constitué sous la forme d'au moins une couche ou couche conductrice et/ou au moins d'un circuit conducteur et/ou au moins d'une piste conductrice (33, 34), **en ce que** l'enregistreur de grandeurs de mesure (29) comprend une unité de contrôle (35), sachant que l'unité de contrôle (35) est constituée à cet effet pour détecter une usure de l'enregistreur de grandeurs de mesure (29) par la mesure de la variation de la résistance électrique et/ou par la mesure d'un court-circuit entre deux couches et/ou circuits conducteurs et/ou pistes conductrices (33, 34) électriquement isolés l'un de l'autre à l'état non usé de l'enregistreur de grandeurs de mesure (29).

2. Palier selon la revendication 1,
**caractérisé en ce que**
la surface d'usure (31) de l'enregistreur de grandeurs de mesure (29) est constituée de manière à correspondre à une découpe de la surface d'enveloppe d'un cylindre ou d'un cône.

3. Palier selon la revendication 1 ou 2,
**caractérisé en ce que**
dans la surface de de glissement (27) du premier élément de palier (26) est disposé un logement d' enregistreur de grandeurs de mesure (30a) ou un chambrage (30), notamment un perçage borgne (41) de préférence en forme de fente, ou une rainure (40) ou une cannelure ou un gradin, **en ce que** l'au moins un enregistreur de grandeurs de mesure (29) est disposé dans le logement d'enregistreur de grandeurs de mesure (30a) ou dans le chambrage (30) et **en ce que** l'enregistreur de grandeurs de mesure (29) ne peut être exclusivement inséré dans le logement de l'enregistreur de grandeurs de mesure (30a) et/ou enlevé du logement de l'enregistreur de grandeurs de mesure (30a) que du côté de la surface de de glissement (27).

4. Palier selon l'une quelconque des revendications précédentes,
**caractérisé en ce que**
le premier élément de palier (26) est une douille de palier (25) et/ou **en ce que** le premier élément de palier (26) peut être disposé sur le côté intérieur (24), notamment de la paroi intérieure, d'un tube de jaumière (15) d'un trou de jaumière (16), et/ou **en ce que** le premier élément de palier (26) peut être disposé sur le côté extérieur du tube de jaumière (15) du trou de jaumière (16), et/ou **en ce que** le deuxième élément de palier (28) peut être disposé sur une mèche de gouvernail (17) ou être constitué en tant que partie d'une mèche de gouvernail (17) et/ou **en ce que** le deuxième élément de palier (28) peut être disposé sur un safran de gouvernail (14) d'un gouvernail (13) et/ou **en ce que** le palier peut être disposé entre le tube de jaumière (15) et la mèche de gouvernail (17) et/ou **en ce que** le palier peut être disposé entre le tube de jaumière (15) et le safran de gouvernail (14).

5. Palier selon l'une quelconque des revendications précédentes,
**caractérisé en ce que**
le matériau électro-conducteur est constitué d'au moins deux couches et/ou d'au moins deux circuits conducteurs et/ou d'au moins deux pistes conductrices (33, 34), sachant que dans un état non usé de l'enregistreur de grandeurs de mesure (29), au moins les deux couches ou couches conductrices et/ou au moins les deux circuits conducteurs et/ou au moins les deux pistes conductrices (33, 34) sont électriquement isolés l'un de l'autre,
sachant que de préférence au moins les deux couches ou couches conductrices et/ou au moins les deux circuits conducteurs et/ou au moins les deux pistes conductrices (33, 34) comportent un espace différent (D1, D2) par rapport à la surface d'usure (31) et/ou sachant que de préférence au moins les deux couches ou couches conductrices et/ou au moins les deux circuits conducteurs et/ou au moins les deux pistes conductrices (33, 34) sont disposés adjacentes l'un à l'autre, de préférence à une distance (D1, D2) de 100 µm à 1000 µm.

6. Palier selon l'une quelconque des revendications précédentes,
**caractérisé en ce que**
le matériau électro-conducteur est disposé dans un support, notamment une platine (32) ou une carte de circuits imprimés, et/ou **en ce que** le matériau électro-conducteur et/ou le support est disposé ou bien coulé dans un matériau non métallique, notamment dans une résine synthétique (36).

7. Palier selon l'une quelconque des revendications 3 à 6,
**caractérisé en ce que**
l'enregistreur de grandeurs de mesure (29) est fixé avec un matériau non métallique, notamment avec une résine synthétique (36), dans le logement d'enregistreur de grandeurs de mesure (30a) ou dans le chambrage (30).

8. Palier selon l'une quelconque des revendications 3 à 7,
**caractérisé en ce que**
dans une paroi et/ou une paroi latérale du logement d'enregistreur de grandeurs de mesure (30a) ou du chambrage (30), une ouverture passant à travers le premier et/ou le deuxième élément de palier (26, 28), notamment un perçage de passage (43), est aménagé de préférence dans le fond (42) et/ou à la base du logement d'enregistreur de grandeurs de mesure (30a) ou du chambrage (30) et **en ce qu'**un moyen de guidage de signaux, notamment un conducteur électrique ou un câble, de l'enregistreur de grandeurs de mesure (29) est passé à travers l'ouverture.

9. Dispositif de mesure de jeu de palier (39), notamment pour la mesure du jeu de palier d'un palier, notamment d'un palier à collet (23), d'une mèche de gouvernail (17) ou d'un safran de gouvernail (14), comprenant un palier selon l'une quelconque des revendications précédentes,
**caractérisé en ce que**
le dispositif de mesure de jeu de palier (39) comporte une unité de calcul, laquelle est constituée pour recevoir et pour traiter des signaux et/ou des informations de l'au moins un enregistreur de grandeurs de mesure (29).

10. Gouvernail (13) pour un bateau comprenant une mèche de gouvernail (17) et un safran de gouvernail (14) disposé sur la mèche de gouvernail (17),
**caractérisé en ce que**
le gouvernail (13) comprend un palier selon l'une quelconque des revendications 1 à 8 et/ou un dispositif de mesure de jeu de palier (39) selon la revendication (9).

11. Gouvernail (13) selon la revendication 10,
**caractérisé en ce que**
le gouvernail (13) comporte un trou de jaumière (16) comprenant un tube de jaumière (15), **en ce que** le palier est disposé entre le tube de jaumière (15) et la mèche de gouvernail (17), et/ou **en ce que** le palier est disposé entre le tube de jaumière (15) et le safran de gouvernail (14) et/ou **en ce que** le tube de jaumière (15) comporte à l'extérieur ou à l'intérieur un moyen de guidage, notamment un chambrage (30), une rainure (40) ou un conduit de câble (47), et **en ce qu'**un moyen de guidage de signaux, notamment un conducteur électrique ou un câble, de l'enregistreur de grandeurs de mesure (29) est disposé dans le moyen de guidage de telle manière que des signaux et/ou des informations peuvent être guidés ou bien transmis entre l'enregistreur de grandeurs de mesure (29) et une unité de calcul.

12. Gouvernail (13) selon la revendication 11,
**caractérisé en ce qu'**
un écarteur est prévu de préférence constitué sous la forme de bagues de serrage, **en ce que** l'écarteur peut être monté de préférence sur le côté intérieur (24) du tube de jaumière de manière à pouvoir éviter des endommagements de l'enregistreur de grandeurs de mesure (29) lors de l'introduction de la mèche de gouvernail (17) dans le tube de jaumière (15) du trou de jaumière (16).

13. Procédé pour la mesure d'un jeu de palier et/ou d'une usure d'un palier pour une mèche de gouvernail (17) ou pour un safran de gouvernail (14) pouvant être exécuté avec un palier selon l'une quelconque des revendications 1 à 8, avec un dispositif de mesure de jeu de palier (39) selon la revendication 9 ou avec un gouvernail (13) selon l'une quelconque des revendications 10 à 12,
**caractérisé en ce qu'**
au moins un enregistreur de grandeurs de mesure (29) n'ayant pas la forme d'une tige avec une unité de contrôle (35) et au moins deux couches et/ou circuits conducteurs et/ou pistes conductrices (33, 34) dans un matériau électro-conducteur est disposé dans un palier pour loger une mèche de gouvernail (17) ou un safran de gouvernail (14) et **en ce que** la résistance électrique des au moins deux couches et/ou circuits conducteurs et/ou pistes conductrices (33, 34) est mesurée, sachant que l'unité de contrôle (35) détecte une usure de l'enregistreur de grandeurs de mesure (29) par la mesure de la variation de la résistance électrique au moins d'une des deux couches et/ou des deux circuits conducteurs et/ou pistes conductrices et/ou par la mesure d'un court-circuit entre deux couches et/ou circuits conducteurs et/ou pistes conductrices (33, 34) électriquement isolés l'un de l'autre à l'état non usé de l'enregistreur de grandeurs de mesure (29) et **en ce qu'**un jeu de palier et/ou une usure de palier est constaté, si une usure de l'enregistreur de grandeurs de mesure (29) est détecté.

14. Procédé selon la revendication 13,
**caractérisé en ce que**,
les valeurs de mesure et/ou les sauts de valeur de mesure de la résistance électrique et/ou d'un court-circuit sont mémorisés et/ou **en ce qu'**avant la mise en place de l'enregistreur de grandeurs de mesure (29) dans le palier au moins une couche et/ou un circuit conducteur et/ou une piste conductrice (33,34) dans un matériau électro-conducteur est séparé de préférence par rectification de la surface d'usure (31) de l'enregistreur de grandeurs de mesure (29) et **en ce qu'**une mesure de référence et/ou une mesure d'essai de la résistance électrique et/ou d'un court-circuit est effectuée.
